# EUROPEAN PATENT APPLICATION

(11) **EP 4 799 478 A1**
(43) Date of publication of application: **02.09.2026**
(21) Application number: 26161301.2
(22) Date of filing: 27.02.2026
(51) Int. Cl.: A01M 7/00

(54) **COMPENSATED APPLICATION SYSTEMS FOR AGRICULTURAL PRODUCTS AND METHODS FOR SAME**

(30) Priority: 28.02.2025 US 202519067563
(71) Applicant: CNH Industrial America LLC, New Holland, PA 17557 (US)
(72) Inventor: KOCER, Jared Ernest, Sioux Falls, South Dakota, 57110 (US); RUST, Matthew K., Chandler, Arizona, 85286 (US); MICHAEL, Nicholas O., Sioux Falls, South Dakota, 57108 (US); WIEGMAN, Christopher Richard, Oak Lawn, Illinois, 60453 (US)
(74) Representative: Pfenning, Meinig & Partner mbB

(57) **Abstract**

An agricultural product application system includes at least one sprayer boom extending between boom proximal and boom distal ends. The sprayer boom includes a plurality of sprayer nozzles distributed along the sprayer boom and agricultural product plumbing interconnected with each of the sprayer nozzles. One or more processors are configured to assign a compensation value to one or more sprayer nozzles, the compensation value based on one or more of boom kinematic characteristics of the sprayer boom or vehicle kinematic characteristics of an agricultural sprayer. The one or more processors monitor a target relative to at least one sprayer nozzle of the one or more sprayer nozzles and the assigned compensation value. The one or more processors initiate spraying of an agricultural product from at least one sprayer nozzle while the target is coextensive with the at least one sprayer nozzle having the compensation value.

## Description

### COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings that form a part of this document: Copyright CNH Industrial America, LLC, of New Holland, Pennsylvania, USA. All Rights Reserved.

### TECHNICAL FIELD

This document pertains generally, but not by way of limitation, to agricultural vehicles, associated agricultural implements, and conduct of agricultural operations.

### BACKGROUND

Agricultural vehicles and associated agricultural implements conduct agricultural operations in fields. In some examples the agricultural implements conduct agricultural operations including tilling, planting, cultivating, spraying, spreading, or harvesting. One example of an agricultural operation is spraying of an agricultural product from one or more sprayer booms (an implement example including laterally extending booms) extending from a sprayer vehicle (an example agricultural vehicle). The sprayer booms including a plurality of sprayer nozzles positioned along the booms. The sprayer nozzles are interconnected with a source of liquid agricultural product by plumbing.

In a broad application configuration the agricultural sprayer applies a specified flow rate of agricultural product through the sprayer nozzles to a crop such as, corn, soybeans, or the like. In some examples, the specified flow rate is varied in one or more sections of the booms, for one or more sprayer nozzles, or the like to vary the quantity of agricultural product during turns or changes in speed. Optionally, the variations are implemented as part of autonomous control of the agricultural operation.

In still other examples, a position sensor is included with the agricultural vehicle. For instance, a Global Positioning System (GPS) or Real Time Kinematic (RTK) sensor is provided with a sprayer vehicle to determine the location of the sprayer vehicle within a field. In other examples, agricultural product prescriptions are indexed to locations, such as zones, in the field. A controller varies the spraying of agricultural product (e.g., flow rate) based on the location of the agricultural sprayer relative to the agricultural product prescriptions. For instance, as the agricultural sprayer moves from a first zone to a second zone the controller automatically modulates the agricultural operation from a first prescription indexed to the first zone to a second prescription associated with the second zone.

Optionally, because sprayer booms have known dimensions including boom length, nozzle positions (or spacing), or the like in another example the controller varies performance of the agricultural sprayer based on sprayer nozzle position relative to the known position of the sprayer vehicle, such as a vehicle mounted GPS sensor. The length and nozzle position permit determination of the sprayer nozzle position relative to the GPS sensor, for instance with trigonometric functions (e.g., sine, cosine, and tangent). In this example, as a sprayer nozzle, or subset of sprayer nozzles, is positioned in a second zone (from a first zone) the controller transitions to the associated second prescription for the sprayer nozzle. Accordingly, the controller uses the sprayer nozzle location (based on the sprayer vehicle location) to control the agricultural operation at the sprayer nozzle.

### OVERVIEW

The present inventors have recognized, among other things, that a problem to be solved can include monitoring (sometimes unpredictable or varied) movement of agricultural implements, such as sprayer booms and the associated sprayer nozzles, relative to an agricultural vehicle, application target or the like, and compensating for this movement for accurate conduct of agricultural operations. For instance, with an agricultural implement, such as a sprayer, the sprayer booms extend, dozens of feet (e.g., 20 feet or more) or more (e.g., 120, 160 feet or the like) and optionally include racks movably or statically coupled with the sprayer and having their own nozzle assemblies. The sprayer booms are, in some examples, articulable, movable, supported with suspensions or combinations thereof relative to the sprayer vehicle; an application target, such as a target crop; or the like. For instance, sprayer booms are in some examples actively articulated, rolled (relative to the vehicle direction of travel), or otherwise moved to change boom height at one or more locations along the sprayer boom to address target height changes (e.g., soil or crop), terrain variation, prescription changes to target height or the like. In other examples, suspension systems (e.g., associated with racks) for the sprayer booms passively or actively control damping relative movement between the sprayer booms and the vehicle. In example sprayers including racks coupled with the sprayer vehicle, the rack and sprayer booms are collectively referred to as sprayer booms.

Additionally, the sprayer vehicle conducts turns, changes speed, navigates uneven terrain, grades or the like while navigating a field. Accordingly, the kinematics of the sprayer vehicle (e.g., vehicle kinematics) change during operation. These variations are transmitted to the sprayer booms and correspondingly cause changes in the kinematics of the implement, such as the sprayer boom (e.g., implement kinematics). In some examples, the implement kinematics deviate or are difficult to predict based on the kinematics of the agricultural vehicle. For instance, as the sprayer vehicle articulates the sprayer booms, turns, changes speed, navigates uneven terrain or grades, or performs combinations of the same the sprayer booms deflect including, but not limited to, torsion, bending, movement at joints or actuators, or the like. Further, deflection varies from the boom distal end to the boom proximal end with the boom distal end having amplified deflection relative to the boom proximal end proximate the sprayer vehicle. The deflection of the sprayer boom frustrates the accurate determination of sprayer nozzle positions because the dimensions (e.g., angles, position or the like) between the sprayer vehicle GPS (or RTK) sensor and the sprayer nozzles, as well as direction of movement of the sprayer boom, are changing based on the deflection. Accordingly, the application of trigonometric functions for determining sprayer nozzle positions is difficult. Further still, changes in velocity (e.g., acceleration) further complicate the determination of sprayer nozzle positions. In still other examples, deflection of the sprayer booms includes an oscillatory movement sometimes referred to as whipping (e.g., backward and forward, up and down, counter or with movement of the sprayer, or combinations of the same) that adds another frustrating dynamic for accurately determining sprayer nozzle positions.

One solution that partially addresses the sometimes unpredictable movement of agricultural implements, such as sprayer booms, is the blanket or broad application of agricultural products. For instance, an agricultural sprayer implements a broad application of the agricultural product at one or more specified values, such as flow rate, pressure, droplet size or the like. Because of the consistency of the broad application deflection of the sprayer booms has a decrease impact because even with deflection the sprayer nozzles continuously apply the agricultural product.

Broad application of agricultural products fails to address discrete application specifications, for instance based on varied zone based prescriptions or targeted application (e.g., to individual plants, pests, weeds or the like). In discrete applications the control for the sprayer nozzles with specified spray values (e.g., activation/deactivation, flow rate, droplet size or the like) varies based on sprayer nozzle position relative to product descriptions and associated zones or targets in the field. Because sprayer nozzle position within zones in the field sets the specified values at the sprayer nozzles, inaccurate position determination (e.g., because of boom deflection) facilitates the setting of specified values based on a wrong prescription. For instance, a plurality of nozzles along a sprayer boom from the boom distal end to an intermediate position along the boom are displaced rearwardly to varying degrees as a result of deflection caused by a sprayer vehicle turn. In one example, these sprayer nozzle positions are determined as inside of a zone (e.g., after conduct of an end of row turn and initiation of spraying a swatch) and spraying is initiated. However, because of deflection of the sprayer boom the distal and intermediate sprayer nozzles are actually rearwardly positioned relative to the determined position in the zone associated with the end of row turn. The resulting early initiation of spraying thereby applies the agricultural product within a zone that is not specified for application. Instead, the agricultural product is applied where not prescribed (e.g., is wasted) potentially to targets or crops that fail to benefit from the application.

A potential solution to this problem is extending coverage of prescriptions into adjacent zones. For instance, by overlapping zones a forthcoming agricultural prescription is implemented earlier than specified to ensure sprayer nozzles potentially within the forthcoming zone due to deflection of the sprayer booms are applying agricultural product according to that forthcoming prescription.

In targeted applications, for instance to individual crops, groups of crops, weeds, pests or the like extension of coverage, such as to a zone, sometimes overapplies agricultural products. In some examples, agricultural products are applied to adjacent (non-target) crops as well as the target crop or to a weed (target) and adjacent (non-target) crops. The overapplication of agricultural products is in some cases not cost effective, or applies the agricultural product to a crop that will not benefit from the product or is in fact harmful. Deflection of sprayer booms because of terrain, grades, articulation of the booms, turns, changes in speed, or combinations of the same further frustrates targeted applications. For example, targeted agricultural product applications miss the target because of sprayer boom deflection while errantly applying agricultural product to non-targets.

The present subject matter can help provide a solution to these problems, such as by agricultural product application systems, described herein, that compensate for kinematics of the implement, such as sprayer booms (including associated sprayer nozzles), sprayer vehicle systems (e.g., sprayer chassis, sprayer boom suspension assemblies), as well as vehicle movement as it relates to movement of the sprayer booms. One example agricultural product application system is configured for installation with one or more implements, for instance a sprayer boom (including booms), or the like. In an example implement including a sprayer implement the implement includes at least one sprayer boom and a plurality of sprayer nozzles distributed along the sprayer boom.

The agricultural product application system includes a controller, such as one or more processors, configured to correct for one or more of position, velocity, acceleration, or the like (kinematic characteristics) of one or more of the sprayer vehicle, sprayer booms or the like. For instance, one or more compensation values are applied to increase accuracy of spraying by correcting one or more of the position, velocity, acceleration or the like sprayer booms or associated sprayer nozzles. In one example, correcting for one or more kinematic characteristics includes assigning a compensation value including a zone, perimeter, border, or the like, referred to herein as a halo or halo profile, bubble, or the like, to one or more of the sprayer nozzles along the sprayer boom, the targets for spraying, or the like. The halo profiles include one or more characteristics (e.g., radius, dimensions, size, shape, or the like) that are based on one or more boom kinematic characteristics of one or more of the sprayer boom or the sprayer vehicle. The boom kinematic characteristics include, but are not limited to, one or more of boom position, boom velocity, boom acceleration, boom deflection, boom curvature, boom pitch, boom pitch rate, boom yaw, boom yaw rate, boom roll, boom roll rate, or the like. In a similar manner, vehicle kinematic characteristics include, but are not limited to, one or more vehicle position, vehicle velocity, vehicle acceleration, vehicle pitch, vehicle yaw, vehicle roll, rates of change of the same, or the like. Boom kinematic and vehicle kinematic characteristics are also referred to collectively or alone herein as either of kinematic characteristics, assembly kinematic characteristics, or the like.

The one or more processors of the agricultural product application systems monitor one or more targets relative to the halo profiles (e.g., compensation values, such as a halo, bubble, bubble profiles, dimension, radius, shape, size, or the like). The one or more targets include targeted plants, such as crops or weeds; pests; or the like. In one example, the agricultural vehicle, such as a sprayer chassis includes a target identification sensor, such as a suite of cameras and sensors provided on the sprayer chassis that scans forthcoming crops that are aligned with the sprayer boom. In another example, the target identification sensor scans the swath covered by one or more sprayer booms, and permits the identification of target crops, weeds, pests or the like. The identified targets are indexed relative to the field, vehicle (e.g., GPS sensor, fiducial), or the like to permit monitoring of the targets relative to the sprayer booms and the associated sprayer nozzles. In some examples, the targets included respective compensation values, for instance corresponding to a profile of the canopy (e.g., perimeter, area, shape and size of shape, or the like).

The agricultural product application systems conduct spraying of the agricultural product from one or more of the sprayer nozzles while the target (e.g., identified crop, weed, pest or the like) intersects with the corrected sprayer nozzle (e.g., sprayer nozzle with corrected position, velocity, acceleration, or the like), for instance having a halo profile, or profiles, of one or more associated sprayer nozzles. As discussed herein, the halo profile (including profiles) of the associated sprayer nozzles is determined based on one or more kinematic characteristics of the sprayer vehicle, sprayer boom, or the like.

In operation, as the sprayer boom and a thirteenth nozzle (e.g., of 32 nozzles along the boom) having an associated halo profile approaches the target the agricultural application system monitors the target location and halo profile for the thirteenth nozzle (moving with the sprayer boom). Upon intersection between the halo profile and the target the thirteenth nozzle is actuated with the agricultural product application system and the agricultural product is applied. In one example, a comparator compares the positions of the target and the one or more halo profiles and commences spraying with the associated sprayer nozzles upon colocation (e.g., intersection) of the target with the halo profile. In other examples, spraying is commenced from a first sprayer nozzle and a second sprayer nozzle (adjacent, proximate, next nozzle adjacent, or the like) upon colocation of a halo profile of one of the sprayer nozzles with the target. Optionally, the agricultural product is applied for a specified period, for instance a set time, variable time (e.g., based on vehicle speed, nozzle speed, or the like), or the like. In another example, application of the agricultural product is arrested upon departure of the target from the halo profile (e.g., termination of the intersection). In still another example, if the halo profiles of one or more sprayer nozzles intersect with a target, such as a crop falling within both of two or more halo profiles (e.g., of the thirteenth and fourteenth sprayer nozzles), the sprayer nozzles associated with those halo profiles are both actuated to apply the agricultural product. Because the target bridges between the halo profiles the agricultural product is provided by the plural sprayer nozzles. Optionally, the system commences spraying from a nozzle assembly to an intersecting target, and also commences spraying from additional nozzle assemblies, for instance adjacent nozzle assemblies, nozzle assemblies in the same section of the boom, or the like to ensure application to the target.

As discussed herein, the agricultural product application systems conduct spraying of the agricultural product from one or more of the sprayer nozzles while the target (e.g., identified crop, weed, pest or the like) intersects with the corrected sprayer nozzle having a correction value. In another example, the corrected value includes one or more updated or refined position, velocity, acceleration or the like based on the kinematics of either or both of the sprayer boom or the sprayer vehicle. As discussed herein, the correction value is in one example, a halo profile. In another example, the correction value includes a correction or compensation that refines the associated sprayer nozzle position based on monitored kinematics (e.g., of either or both of the sprayer boom, sprayer vehicle, or the like). In some examples, the correction value is illustrated as a vector extending from a determined position to a refined position with an indexed velocity (e.g., direction of movement of the sprayer nozzle, speed or the like). In other examples, the correction value is a numerical value including but not limited to coordinates, angle, magnitude, or the like.

In operation, as the sprayer boom and a sixteenth nozzle (e.g., of 32 nozzles along the boom) having an associated correction value approaches the target the agricultural application system monitors the target location and the refined position (and optionally speed, acceleration or the like) for the sixteenth nozzle (moving with the sprayer boom). Upon arrival of the target at the sixteenth sprayer nozzle with the associated correction value the sixteenth nozzle is actuated with the agricultural product application system and the agricultural product is applied. In one example, a comparator compares the positions of the target and the sixteenth sprayer nozzle (with the correction value) and commences spraying with the sixteenth sprayer nozzle upon colocation (e.g., intersection) of the target with the corrected sixteenth nozzle. Optionally, the agricultural product is applied for a specified period, for instance a set time, variable time (e.g., based on vehicle speed, nozzle speed, or the like), or the like. In another example, application of the agricultural product is arrested upon departure of the target from the position of the corrected sixteenth sprayer nozzle (e.g., termination of the intersection). In still another example, if plural sprayer nozzles and associated correction values of the nozzles intersect with a target, such as a crop falling within both of the corrected position (e.g., of the fifteenth and sixteenth sprayer nozzles), the sprayer nozzles are both actuated to apply the agricultural product.

In another example, the agricultural product application system determines the target is within one or more halo profiles by way of assessing a time of arrival for the halo profiles or sprayer nozzle positions with associated numerical or vector type correction values relative to the target. Each of the halo profiles and positions with numerical or vector corrections values are collectively examples of correction values. For instance, with the indexed position of one or more targets, assignment of halo profiles along a sprayer boom, location sensing for the sprayer (and the sprayer boom and its nozzles), and the sprayer speed, a time of arrival for one or more halo profiles relative to the target is determined. Upon achieving the time of arrival the agricultural product is sprayed from the one or more sprayer nozzles associated with the one or more halo profiles aligned with the target. In a similar manner, spraying is optionally arrested from the actuated sprayer nozzles upon expiration of specified spray period, for instance set based on sprayer speed, specified quantity or flow rate of the agricultural product or the like. In the examples with sprayer nozzles having associated correction values (e.g., vectors, numerical values, or the like) the time of arrival is specified between the target and the corrected sprayer nozzles.

Assignment of the halo profiles or other example correction values to the one or more sprayer nozzles along the boom is conducted, in one example, by assignment to the sprayer nozzles provided along the sprayer boom with the boom presumed not to deflect. However, the halo profiles or other example correction values are generated (including selected) based on one or more of boom or vehicle kinematic characteristics. For instance, an operator selects halo profiles from a chart, look up table, or the like based on observed behavior of one or more of the sprayer vehicle, sprayer boom, including deflection, pitch, yaw, roll or the like. In a similar manner, other example correction values (e.g., vectors, numbers or the like) are chosen from a chart, look up table or the like based on observed behavior. In another example, one or more boom kinematic sensors monitor the kinematic characteristics of the sprayer boom or sprayer vehicle, and the halo profiles or other correction values are determined based on those kinematic characteristics (e.g., boom position, velocity, acceleration, curvature, deflection, pitch, yaw, roll of the boom, rates of change of the same, vehicle characteristics, or the like). The correction values, such as halo profiles; vectors; numerical corrections for position, velocity or the like; are then assigned to sprayer nozzles along the sprayer boom. In some examples the correction values, such as halo profiles, vectors, or numerical corrections, are graduated according to a position along the sprayer boom. For instance, halo profiles are graduated from a relatively smaller profile to larger profiles between a boom proximal end portion and a balloon distal end portion (where greater movement of the sprayer nozzles is experienced).

The positions of the halo profiles or sprayer nozzles with corrections values are static relative to the vehicle chassis. In one example, because the halo profiles are premised on boom kinematics, such as deflection, boom movement is compensated for even with a presumed static sprayer boom. As the halo profiles distributed along the (presumed static) sprayer boom intersect with forthcoming targets spraying is conducted from the associated nozzles. Spraying while intersecting with the halo profiles that are larger than the sprayer nozzles themselves, and in some examples larger than the spray patterns emanating from the sprayer nozzles, ensures coverage of the targets. In examples with other correction values, as targets intersect sprayer nozzles with one or more of corrected positions, velocities, or the like, including within a zone (e.g., within 12 inches) around the corrected sprayer nozzle spraying is conducted.

In another example, the halo profiles are indexed to the associated sprayer nozzles, and one or more of the sprayer boom movement or sprayer vehicle movement is monitored to also monitor dynamic movement of the halo profiles with the sprayer boom. In these examples, during conduct of an agricultural operation the sprayer booms are monitored with one or more boom kinematic sensors (e.g., cameras, radar, LIDAR sensors, or the like) to determine sprayer boom kinematics (e.g., movement, such as position, velocity, acceleration, boom deflection, boom curvature, pitch, roll, yaw, rates of change of the same, or the like) relative to the vehicle chassis. In a similar manner, a vehicle accelerometer, GPS sensor, yaw rate sensor or the like are examples of one or more vehicle kinematic sensors that monitor sprayer vehicle movement. The halo profiles, indexed to the sprayer nozzles along the boom, move with the determined sprayer boom movement. In another example, the monitored boom kinematics are provided to an algorithm, such as a mathematical algorithm approximating dynamic performance of the boom, an artificial intelligence model (e.g., in some examples taught with machine learning), or the like to predict boom movement and associated halo profile positions (or other example correction values) based on the input boom kinematics, vehicle kinematics or both.

The agricultural product application systems conduct spraying of the agricultural product from one or more of the sprayer nozzles while the target (e.g., identified crop, weed, pest or the like) intersects with the sprayer nozzle having the associated correction value, such as halo profile, or profiles, numerical or vector correction values or the like, of one or more associated sprayer nozzles moving with the monitored sprayer boom. For instance, as the sprayer boom and a 30^{th} nozzle (e.g., of 32 nozzles along the boom) having an associated halo profile approaches the target the agricultural application system monitors the target location and the dynamic halo profile for the 30^{th} nozzle (moving with the sprayer boom). For example, one or more of position, velocity, acceleration, deflection of the boom, curvature of the boom, direction of movement (e.g., forward or back, up or down), pitch, yaw, roll, rates of changes of the same, or the like are monitored to accurately determine the position of the one or more halo profiles. Upon intersection between the dynamic halo profile and the target the 30^{th} nozzle is actuated with the agricultural product application system and the agricultural product is applied. In one example, a comparator compares the positions of the target and the one or more halo profiles (or sprayer nozzle with other example correction values) and commences spraying with the associated sprayer nozzles upon colocation (e.g., intersection) of the target with the halo profile. In another example, the agricultural product application system determines the target is within the one or more halo profiles by way of assessing a time of arrival for the halo profiles relative to the target.

Because the sprayer boom kinematics are monitored one or more of the correction values, such as the halo profiles are accurately located (e.g., along a moving sprayer boom) relative to forthcoming targets, such as a target crop, target weed, target pest, or the like. Accordingly, upon intersection between one or more halo profiles and a target, spraying is conducted with the sprayer nozzle optionally relatively close to the target in comparison to the systems that do not monitor boom kinematics. In one example, the halo profiles assigned with the agricultural product application system are accordingly smaller in comparison to halo profiles assigned with a sprayer boom that is not monitored for boom kinematics. In this example, the volume of sprayed agricultural products is decreased and sprayer accuracy is potentially increased based on smaller, accurately indexed halo profiles that provide a tighter intersection between the profiles (and their sprayer nozzles) and a target.

This overview is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
- Figure 1: is a perspective view of one example of an agricultural vehicle and agricultural implement.
- Figure 2: is a side view of one example of a sprayer implement including first and second sprayer booms.
- Figure 3: is a plan view of an agricultural sprayer conducting targeted spray application of one or more agricultural products.
- Figure 4: is a plan view of one example of a sprayer boom experiencing deflection while spraying.
- Figure 5: is a schematic view of one example of an agricultural product application system.
- Figure 6: is a plan view of one example of halo profile generation and assignment.
- Figure 7: is one example of a compensation value chart.
- Figure 8: is a plan view an example of sprayed application of an agricultural product according to halo profile intersections relative to a sprayer boom.
- Figure 9: is a plan view of another example of sprayed application of an agricultural product according to halo profile intersections relative to a deflected sprayer boom.
- Figure 10: is a block diagram showing one example of a machine configured to perform one or more of the methods described herein.

### DETAILED DESCRIPTION

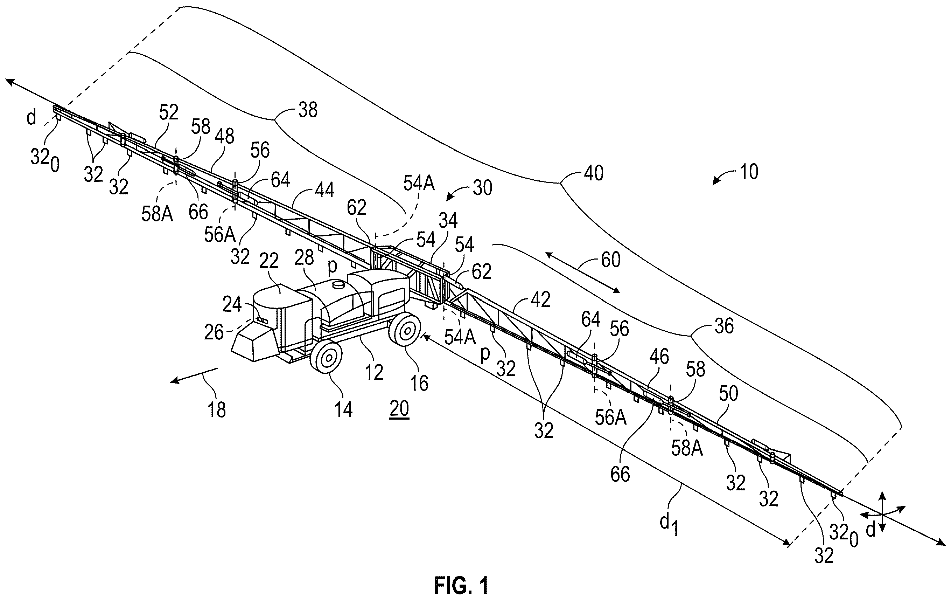

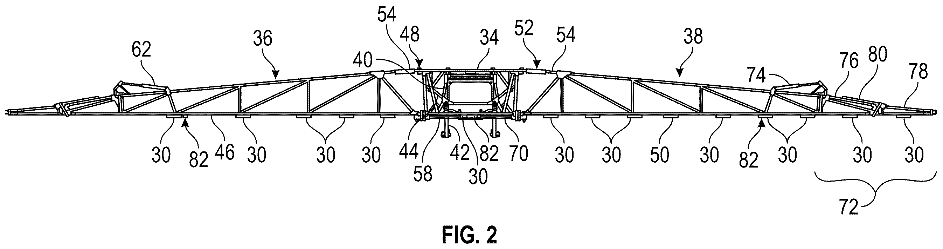

An agricultural applicator, such as a self-propelled agricultural sprayer, is illustrated in Figures 1 and 2. However, in alternative embodiments, the agricultural applicator is configured as another suitable type of applicator configured to perform an agricultural spraying or other agricultural product application operation, such as a tractor, prime mover, or other work vehicle configured to haul or tow an applicator implement, such as a sprayer implement.

In some embodiments, such as the one illustrated in Figure 1, the agricultural sprayer 10 includes a chassis 12 configured to support or couple to a plurality components. For example, front and rear wheels 14, 16 or similar ground engaging elements are coupled to the chassis 12. The wheels 14, 16 support the agricultural sprayer 10 relative to a ground surface and move the agricultural sprayer 10 in a direction of travel (e.g., as indicated by arrow 18 in Figure 1) across a field 20. The agricultural sprayer 10 includes a power plant, such as an engine, a motor, or a hybrid engine-motor combination, and a transmission configured to transmit power from the engine to the wheels 14, 16.

The chassis 12 supports a cab 22 in an example (e.g., where operator control is specified or optional, such as in an autonomous sprayer), or other form of operator station, that houses various control or input devices (e.g., levers, pedals, control panels, buttons, keyboard, trackball, mouse, control stick, or the like) for permitting operator control of the operation of the sprayer 10. For instance, as shown in Figure 1, the agricultural sprayer 10 includes a user interface or human-machine interface (HMI) 24 for providing one or more of messages, alerts, or the like to the operator and optionally for allowing the operator to interface with the vehicle through one or more user-input devices 26 (e.g., levers, pedals, control panels, buttons, keyboard, trackball, mouse, control stick, or the like) within the cab 22. In other examples, the chassis 12 is without a cab 22, for instance in a fully autonomous sprayer.

The chassis 12 supports one or more tanks, such as product tanks 28, a rinse tank, or the like. The one or more product tanks 28 store or hold an agricultural product, such as a pesticide, herbicide, insecticide a nutrient, or the like. Optionally, the product tanks 28 include a carrier fluid and additional product tanks 28 including the agricultural product (or products) for injection to the carrier fluid, for instance at plumbing proximate to the tanks 28 or downstream at (including proximate) nozzle assemblies 32. The agricultural product is conveyed from the product tank 28 through a product circuit including numerous plumbing components, such as interconnected tubing, for application onto the field 20 (e.g., one or more targets, such as plants soil, pests, or the like). The product circuit and nozzle assemblies 32 are provided along one or more sprayer booms, such as the boom assembly 30 shown in Figure 1. The agricultural product is provided to the one or more nozzle assemblies 32 (also referred to as sprayer nozzles, sprayer nozzle assemblies, or the like in some places herein) mounted on the boom assembly 30 (or the sprayer 10) for application to the field 20.

Each nozzle assembly 32 dispenses the agricultural product from the associated product tank 28 onto one or more targets, such as the field 20, plants (crop, weed, or the like), pests, or the like. Agricultural product is supplied under pressure (e.g., from one or more pumps) and is administered as a spray from the nozzle assembly 32.

Each nozzle assembly 32 includes one or more nozzle valves and an associated spray tip (also referred to herein as a sprayer nozzle, nozzle assembly, or the like). In several embodiments, the operation of each of the one or more nozzle valves 102 for a plurality of nozzle assemblies 32 is individually controlled such that the valves regulate one or both of the flow rate or pressure of the agricultural product through the associated nozzle assembly 32 and its spray profile (e.g., spray pattern, droplet size, or the like). For example, one or more of the nozzle valve, spray tip (e.g., a modulating spray tip), or the like is modulated (e.g., rotated, translated, pulsed or the like) to control the spray profile from the associated nozzle assembly 32. In one example, a control valve of a nozzle assembly 32 is pulsed between open and closed positions in the manner of pulse width modulation (PWM) including duty cycle control, frequency control or the like to control spray output from the nozzle assembly 32. In some examples, the PWM control valve duty cycle, frequency, both, or the like of a first nozzle assembly 32 are varied relative to the duty cycle, frequency, or the like of second nozzle assembly 32 (e.g., adjacent, in another section of the boom, or the like). Variation of control of the control valves, modulating spray tip, or the like permits achieving specified flow rates, spray profiles, or the like for the agricultural product at each of the nozzle assemblies 32.

As further shown in Figures 1 and 2, the boom assembly 30 (an example agricultural implement) includes a frame 34 that supports first and second sprayer booms 36, 38, that extend in a cantilevered nature from the frame 34. The first and second sprayer booms 36, 38 are movable between an operative or unfolded position (Figures 1 and 2) and an inoperative or folded position. While applying the agricultural product, the sprayer booms 36, 38 are deployed to the unfolded position to cover swaths of the field 20. Optionally, one or more features of the boom assembly 30 permit additional sprayer boom 36, 38 movement including, but not limited to, boom actuators, boom joints, suspension provided by the frame 34, deflection or deformation of the sprayer booms 36, 38 while traversing the field 20, conducting turns, or the like.

While extended, each sprayer boom 36, 38 includes a first lateral distance d1 defined between the frame 34 and an outer nozzle assembly 32o or distal end portion of the sprayer booms 36, 38. Further, the sprayer booms 36, 38, when unfolded, extend across a swath 40 between the respective outer nozzle assemblies 32o of the first and second sprayer booms 36, 38 that is, in an example, commensurate with an area of the field 20 the agricultural sprayer 10 covers during a pass through the field 20 to perform the spraying operation. In some embodiments, a single sprayer boom 36, 38 is deployed for the spraying operation. In these examples, the field swath 40 includes an area between nozzle assemblies 32 including a nozzle assembly 32 proximate the frame 34 and a nozzle assembly 32o at a distal end portion of the sprayer boom.

Each of the sprayer booms 36, 38 of the boom assembly 30 optionally includes one or more boom sections. For instance, in the illustrated embodiment, the first sprayer boom arm 36 includes a plurality of boom sections, such as a first inner boom section 42, a first middle boom section 46, and a first outer boom section 50. In a similar manner, the second sprayer boom 38 includes a plurality of boom sections, such as a second inner boom section 44, a second middle boom section 48, and a second outer boom section 52. In an example, the first and second inner boom sections 42, 44 are pivotably coupled to the frame 34. Similarly, the first and second middle boom sections 46, 48 are pivotably coupled to the respective first and second inner boom sections 42, 44. The first and second outer boom sections 50, 52 are pivotably coupled to the respective first and second middle boom sections 46, 48. Each of the inner boom sections 42, 44 are pivotably coupled to the frame 34 at pivot joints 54. Similarly, the middle boom sections 36, 38 are pivotally coupled to the respective inner boom sections 42, 44 at pivot joints 56, while the outer boom sections 50, 52 are pivotably coupled to the respective middle boom sections 46, 48 at pivot joints 58.

In other examples, the respective boom sections 42, 44, 46, 48, 50, 52 have discrete plumbing that permits varied application of agricultural product from the associated sprayer nozzle assemblies 32 (also referred to as sprayer nozzles in some places herein). For instance, one or more of flow rate, pressure, starting and stopping of application, droplet size, PWM duty cycle, PMW frequency, coordination of PWM duty cycles or the like are conducted in each of the boom sections relative to other boom sections. In still other examples, finer resolution of nozzle assembly 32 control is conducted, for instance on a per nozzle assembly 32 basis. In these examples, one or more of flow rate, pressure, starting and stopping of application, droplet size, PWM duty cycle, PMW frequency, coordination of PWM duty cycles or the like are controlled at each nozzle assembly 32 (e.g., relative to other nozzle assemblies) to facilitate variations in application between the nozzle assemblies 32. As discussed herein, control of nozzle assemblies 32 permits selective application of agricultural products, for instance to targets, such as crops, weeds, pests, portions of the field, or the like.

As is generally understood, pivot joints 54, 56, 58 are configured to permit relative pivotal motion between the adjacent boom sections of each sprayer boom 36, 38. For example, the pivot joints 54, 56, 58 allow articulation of the various boom sections between a fully extended or working position (e.g., as shown in Figure 1) with the boom sections unfolded along a lateral direction 60 of the boom assembly 30 to conduct an agricultural spraying operation. In another example in a transport position (Figure 2), the boom sections are folded inwardly to reduce the width of the boom assembly 30 along the lateral direction 60. It should be appreciated that, although each sprayer boom 36, 38 is shown in Figure 1 as including three individual boom sections coupled along opposed sides of the central boom section, each sprayer boom 36, 38 may generally have any suitable number of boom sections.

Additionally, as shown in Figure 1, the boom assembly 30 may include inner fold actuators 62 coupled between the inner boom sections 42, 44 and the frame 34 to enable pivoting or folding between a plurality of angles in a fore-aft direction by an actuator coupled with the frame 34 and one of the one or more sprayer booms 36, 38. For instance, the plurality of angles can include a storage angle when one or both of the sprayer booms 36, 38 are positioned in a folded, inoperable position. One or both of the sprayer booms 36, 38 can also be rotated to a default angle relative to the frame 34 in which one or both of the sprayer booms 36, 38 extend a default direction from the frame 34 for operative use of the sprayer booms 36, 38.

Referring again to Figure 1, prior to performing an agricultural operation with the boom assembly 30, each sprayer boom 36, 38 is deployed laterally away from the sprayer 10 and/or the frame 34 along default axes p-d. In various embodiments, the default axis p-d generally oriented ninety degrees relative to the vehicle travel direction such that the default axis p-d is generally transverse to the vehicle travel direction. With the first and second sprayer booms 36, 38 extending from opposing sides of the frame 34, the sprayer booms 36, 38 cover a field swath 40 between the outer nozzle assemblies 32o of the first and second sprayer booms 36, 38, or between the outer end portions of the first and second sprayer booms 36, 38. In some operations, a single sprayer boom 36, 38 is used. In such instances, the field swath 40 may be defined between an outer and an inner operating nozzle assembly 32i, 32o.

During operation, various forces are experienced by the boom assembly 30 causing the sprayer booms 36, 38 and the nozzle associated assemblies 32 to deflect or reposition relative to the frame 34, the sprayer 10, or the default axis p-d. For instance, a portion of the boom assembly 30 is deflected from the default axis p-d (p-d is shown in Figure 1) due to dynamic forces encountered while the sprayer 10 turns, accelerates, decelerates, traverses terrain (e.g., broken, graded, strewn with obstacles), or the like.. In addition, terrain variations and weather (e.g., wind, precipitation, or the like) also cause deflection of the boom assembly 30. In still other examples, a portion of the boom assembly 30 may contact an object (e.g., a fence, ground, or the like), thereby deflecting the boom assembly 30, such as one or both of the sprayer booms 36, 38.

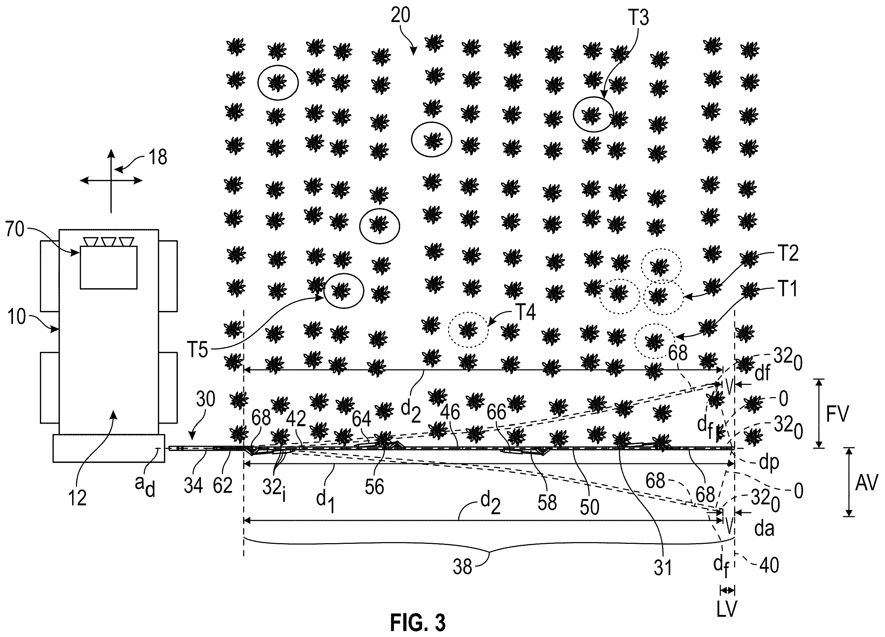

Referring now to Figure 3, deflection of the sprayer boom 38 in a fore direction df (i.e., a direction of forward movement of the sprayer 10 as indicated by arrow 18 in Figure 1) and/or in an aft direction da (i.e., an opposing direction of the forward movement of the sprayer 10 as indicated by arrow 18 in Figure 1) of its initial (undeflected) position dp, as illustrated in Figure 3. An example outer nozzle assembly 32o is positioned a second lateral distance d2 from the frame 34 less than the first lateral distance d1 due to deflection of the boom assembly 30 (e.g., curvature, bowing, hinged movement at a joint or the like). Accordingly, a lateral variance V is formed between the first and second lateral distances d1, d2. This lateral variance V may cause misapplication of an agricultural product to one or more targets (e.g., target crops, pests, or the like) by one or more of the nozzle assemblies 32 assigned for spraying the one or more targets. The misapplication includes one or both of overapplication or underapplication (collectively, misapplication) of the agricultural product. For instance, the lateral variance (V) positions the nozzle assembly 32o in alignment with a crop that is not targeted and accordingly overapplies the agricultural product to that untargeted crop. In another example, the lateral variance (LV) positions the nozzle assembly 32 (e.g., a nozzle assembly proximal the outer nozzle assembly 32o) in a misaligned manner with a target, such as the target T1, thereby underapplying to T1.

In another example, one or more vertical variances are caused by deflection of the sprayer boom 38. Examples of a forward deflection and forward variance (FV) and an aft variance (AF). These vertical variances in various examples may cause misapplication. For instance, agricultural product is overapplied to the example target T1 as the boom in the initial configuration (dp) overlies T1 conducts spraying and the boom continues to spray as the sprayer boom 38 deflects aft (e.g., to the da configuration with AV deflection) while remaining aligned with T1 despite forward movement of the sprayer when a force perturbation causes the deflection. In a similar manner, with the sprayer boom 38 in the initial configuration (dp) agricultural product applied to T1 is potentially underapplied if the boom deflects forward (df to FV deflection) and alignment and coordinated spraying between the associated nozzle assembly 32 is missed.

In embodiments, such as the one illustrated in Figure 3, the suspended sprayer boom 38 extending from the frame 34 is cantilevered. The outer nozzle assembly 32o will have a greater deflection magnitude (both laterally and vertically) from its default position dp in comparison to inner nozzle assemblies, such as example inner nozzle assembly 31. Accordingly, the various deflection characteristics (e.g., FV, AV, LV) are graduated along the sprayer boom 38, nozzle assemblies 32 distal to the frame 34 having greater (e.g., escalating) deflections in comparison to nozzle assemblies more proximal to the frame 34.

Once the perturbation force causing the deflection is overcome or no longer present, the sprayer boom 38 moves back toward the default position dp. In some embodiments, the movement of the sprayer boom 38 may generally occur as harmonic oscillations across the default axis p-d (see Figure 1) such that the sprayer boom 38 may swing between positions at least partially aft of the default axis p-d to the default position dp and then to positions at least partially fore of the default position dp and so on. During the oscillations, each of position, velocity, and acceleration of the inner nozzle assemblies, such as nozzle assembly 32i will be attenuated in comparison to the corresponding position, velocity, and acceleration of the outer nozzle assembly 32o because of the variation of deflection magnitudes along the boom arm 36.

As further shown in Figure 3 targets T1-T5 are illustrated within the field 20. In examples, the targets T1-T5 correspond to one or more crops, weeds, or the like (e.g., pests on crops) designated for targeted application of one or more agricultural products from the nozzle assemblies 32 (e.g., sprayer nozzles) of the sprayer 10. The targets T1-T5 are identified with one or more sensors of the sprayer 10, another vehicle, unmanned aerial vehicle (UAV) or the like. In one example, sensors 68 of the sprayer 10 monitor the forthcoming crops and cooperatively identify the targets T1-T5 for targeted spraying with one or more of the nozzle assemblies 32, for instance one or more nozzle assemblies aligned with one or more of the targets T1-T5. In another example, a sensor 70 (including one or more component sensors) is coupled with the sprayer 10, directed in a travel direction of the sprayer (e.g., 18 in Figure 3) and scans a swath of the field 20 spanned by the sprayer booms 36, 38 to identify targets T1-T5.

In an example, identification of the targets T1-T5 includes, but is not limited to, the detection of dehydration; nutrient deficiency; growth deficiency; identification of a weed, pest or the like. As graphically shown in Figure 3, the different types of identifications (e.g., pest, weed, nutrient, or the like) are optionally reflected with different templates, such as circles, dashed line circles, colored identifications, text annotations on a virtual map, or the like. In still another example, identification of the targets T1-T5 includes indexing a location to the targets T1-T5, for instance one or more coordinates in a global positioning system (GPS), local coordinate system, such as real time kinematics system (RTK), or coordinates relative to the sprayer 10 including the position of the sensor 70, sensors 68, or the like.

As discussed herein (above as well as in the remainder of this document), the targeted application of agricultural products from one or more nozzle assemblies 32 to the targets T1-T5 is, in some examples, difficult because of the relatively small profiles of the targets T1-T5, the movement of the sprayer 10, relative movement of the sprayer booms 36, 38 and the associated nozzle assemblies 32. As further discussed herein, the relative movement of the sprayer arms 36, 38 (in comparison to the chassis of the sprayer 10) further frustrates targeted application because of vertical and lateral variations (e.g., deflection characteristics such as FV, AV, LV), and the graduation of position, speed, and acceleration differences of one or more of the nozzle assemblies 32 because of the distributed positions of the nozzle assemblies 32 along the sprayer booms 36, 38. The frustration to targeted application caused by movement of the sprayer booms 36, 38 and graduated movement of the nozzle assemblies 32 (e.g., relative to the default axis dp, the sprayer 10, or the like) is not limited to position variations, and also includes in some examples graduated variations of one or more of velocity or acceleration. Due to the varied deflection magnitudes along the sprayer booms 36, 38, one or more of a velocity or acceleration of an inner nozzle assembly (e.g., 32i) varies relative to an intermediate nozzle assembly 32, which in turn, varies relative to the velocity or acceleration of the outer nozzle assembly 32o.

For instance, with the sprayer arm 38 in a static position relative to the sprayer 10 (e.g., the chassis 12) comparison between an identified target T1 and the location of one or more of the sprayer nozzles 32 aligned with the target T1 is a matter of comparison of the location of target T1 and the associated on or more sprayer nozzles 32. The sprayer nozzle 32 (or nozzles) that meet (have a coincidental or aligned) location with the target T1 are activated to apply the specified agricultural spray product to T1. Similarly, application is ceased upon the sprayer nozzle 32 leaving (having a different) location than the target T1. However, the targeted application by one or more of the nozzle assemblies 32 to the target T1 (or any of targets T1-T5) is significantly frustrated with movement of the sprayer boom 38 and graduated (varying) movement of the distributed nozzle assemblies 32. For instance, one or more deflection characteristics FV, AV, LV; oscillations, pitch, yaw, roll, deflection at joints or the like (including one or more of position, velocity, acceleration or the like) frustrates the determination of nozzle assembly 32 location relative to targets, residence time aligned with the targets, or the like in comparison to a sprayer boom 38 that is presumed static and almost certainly is not in fact static given grades, turning, terrain variations, boom height changes, boom articulation, or the like. The systems described herein address targeted spraying in a manner that enhances targeted application while decreasing misapplication of agricultural products.

In some embodiments described herein, one or more of boom position, boom velocity, or boom acceleration of each nozzle assembly 32 along the sprayer boom 38 is determined based on the detected, predicted, modeled, or calculated position of various portions of the sprayer boom 38 to compensate (e.g., adjust, refine, address, or the like) for the dynamic movement of the sprayer boom 38 relative to the sprayer 10. The boom speed or boom acceleration may be a speed or acceleration of the sprayer boom 38 at indexed positions along the sprayer boom 38 corresponding to one or more nozzle assembly 32 positions (potentially each of the locations) relative to the frame 34. In some examples, the frame 34 is affixed to the sprayer such that the frame 34 moves at a common chassis speed to the sprayer 10. Based on the summation of the boom speed, or boom acceleration, with the chassis speed, a nozzle assembly position, speed, acceleration or the like relative to a target crop, pest, the sprayer 10 or the like is determined. In other examples, the behavior of one or more of the sprayer 10 (e.g., the chassis 12); sprayer booms 36, 38; or nozzle assemblies 32 is monitored, for instance with one or more sensors 68, 70, or other sensors such as a gyroscope, MEMS gyroscope, gyro sensors, accelerometers, or the like (collectively, kinematic characteristic sensors). Monitoring of the behavior (e.g., kinematic characteristics) of one or both of the sprayer 10 or the sprayer booms 36, 38 (and the associated nozzle assemblies 32), is analyzed and a model generated that outputs one or more values corresponding to estimated position, velocity, speed, or the like for one or more of the nozzle assemblies 32. In either example, the one or more determined position, velocity, acceleration, modeled values or the like are provided as (or precipitate determination of) one or more compensation values and assigned to the associated nozzle assemblies (e.g., the sprayer nozzles) to permit enhanced targeted application of agricultural products to targets, such as targets T1-T5. For example, the targets T1-T5 are monitored, and their locations compared with the nozzle assemblies and the assigned respective compensation values. Spraying of agricultural products from the one or more of the nozzle assemblies 32 is conducted while a target (T1, T2, or the like) is coextensive with the one or more nozzle assemblies having the associated compensation values, for instance upon arrival of the one or more nozzle assemblies with compensation values at the target. In still other examples, a compensation value associated with a nozzle assembly 32 includes an instruction that initiates spraying from the base nozzle assembly 32, as well as other nozzle assemblies 32 (e.g., assemblies adjacent, proximate to, in the same section of a boom, or the like) that may not otherwise intersect with the target even with their own compensation values.

With further reference to Figure 3, one or more sensors 68 are optionally coupled along the sprayer boom 38. The one or more sensors are configured to output data indicative of a boom position, boom height, pitch angle, yaw angle, pressure, velocity, acceleration (including deceleration), or roll angle of the sprayer boom 38 (collectively referred to as boom kinematic characteristics). The boom kinematic characteristics monitored by the one or more sensors 68 permit determination of deflection of the sprayer boom 38, positions of the nozzle assemblies 32, or the like. In other examples, the boom kinematic characteristics permit modeling of the sprayer boom 38 to facilitate compensation of spraying of agricultural product from the associated nozzle assemblies based on the modeled behavior of the sprayer boom 38.

In some examples, a first sensor 68 is positioned on one or both of the sprayer booms 36, 38 at a position proximate to the frame 34. A second sensor 68 is optionally positioned proximate the outer portion of the boom assembly 30 (e.g., proximate to the outer nozzle assembly 32o). In still other examples a single sensor 68 is provided for the sprayer boom 36 or 38, for instance a camera directed along the sprayer boom 36 (or 38) to monitor boom kinematic characteristics. The sensor 68 is mounted along the sprayer boom 36 or mounted to the chassis 12 of the sprayer 10 and directed along the boom. In other examples, the sensors 68 include, but are not limited to, one or more of radar, lidar, camera sensors or the like. In examples including a camera as the sensor 68 one or more fiducials are optionally distributed along the sprayer boom 36 (or 38) to readily permit monitoring and indexing of boom kinematic characteristics based on movement of the fiducials.

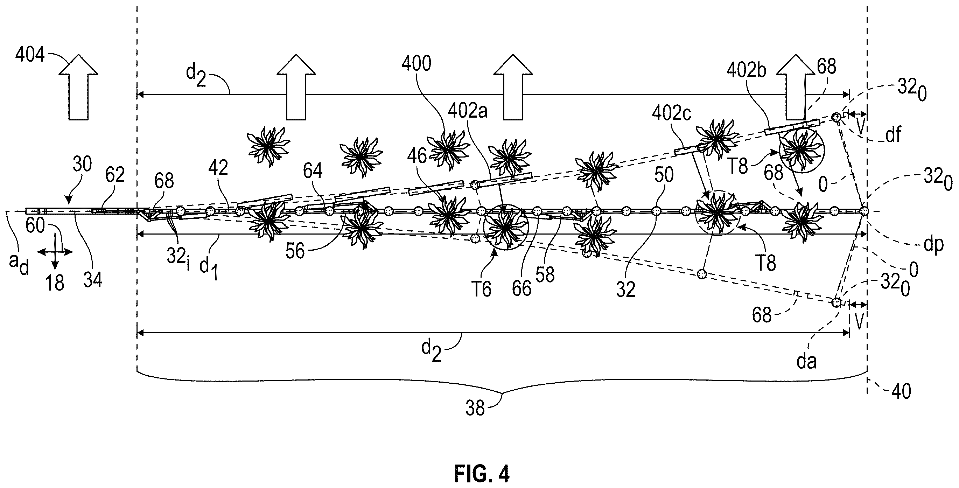

Figure 4 is a detailed schematic view of the sprayer boom 38 in an initial configuration (e.g., dp) and each of fore and aft deflected configurations. The fore deflected configuration is described in the context of Figure 4. The aft deflected configuration permits similar misapplication without inclusion of compensation values as described herein.

As shown in Figure 4, the sprayer boom 38 includes nozzle assemblies 32 (also referred to as sprayer nozzles in some places herein) distributed along the boom and shown with circle indicia in the Figure. An inner (proximal to the sprayer 10) nozzle assembly 32i and an outer nozzle assembly 32o (distal to the sprayer 10) are shown in Figure 4. The nozzle assemblies 32 are shown in the initial configuration (the boom 38 is in solid lines) and a subset of the nozzle assemblies 32 are shown in each of the example fore deflected configuration and the example aft deflected configuration. Each of the fore and aft deflected configurations include example variations, FV and AV, as previously shown in Figure 3. The FV and AV variations are graduated along the sprayer boom 38 because of the attenuated deflection along the sprayer boom from the distal outer nozzle assembly 32o to the proximal inner nozzle assembly 32i.

Example targets T6, T7, T8 of a crop 400 are shown in Figure 4. Targets T6 and T7 (solid line circled) indicate crops that are targeted for nutrient agricultural product application (e.g., fertilizer) while target T8 (dashed line circled) is targeted for a pesticide application. As previously discussed the targets T6-T8 are identified with one or more sensors 68, 70. Identification includes, but is not limited to, monitoring and detection of crops, crop characteristics, weed, weed characteristics, pests, pest characteristics, or the like for application of a associated agricultural product (e.g., fertilizer, herbicide, pesticide, fungicide, water, or the like); indexing of the target including determination of coordinates of the target relative to the sprayer 10, GPS coordinate system, local coordinate system, or the like.

Referring again to Figure 4, and the illustrated fore deflection configuration (df), the spray profiles 402 of a subset of nozzle assemblies 32 are shown in positions that are deflected forward and accordingly displaced from a presumed position corresponding to the initial configuration (e.g., dp in Figure 4). The spray profiles 402 correspond to positions of nozzles 32 in an operating state of the sprayer 10. For instance, in the operating state the sprayer 10 is moving in a forward direction as shown in with arrows 404 representative of a current heading and speed of the sprayer 10 (e.g., a velocity). The sprayer boom 38 is in the fore deflection configuration after the sprayer 10 has conducted a left (counterclockwise) turn. The spray profiles 402 are accordingly positioned forward relative to the static configuration (dp).

In a presumed static configuration the sprayer boom 38 extends statically from right (proximate the chassis 12 of the sprayer 10, see Figure 3) to left (or dp in Figure 4). Accordingly, as the targets T6, T8 are coextensive with at least two respective nozzle assemblies 32 along the presumed static sprayer boom 38 the application system initiates spraying of T6, T8. However, because the sprayer boom 38 is in fact in the fore deflected configuration, the initiated spraying, shown with the spray profiles 402a, is errantly initiated while the nozzle assemblies (deflected forward) are not coextensive with the targets T6, T8. Accordingly, the target application of fertilizer and herbicide misses (including partially misses) the respective targets T6, T8.

In a converse manner, because the sprayer boom 38 moves dynamically in operation the sprayer boom 38 in the fore deflection configuration is slowing, will arrest further forward movement, and will begin moving rearward, for instance because of the elasticity of the boom. In an example, the sprayer boom 38 will swing past the initial configuration dp toward an aft deflection configuration approaching da. In this scenario, as the sprayer 10 continues to move forward target T8 (designated for targeted fertilizer application) arrives at the sprayer boom 38. In the presumed static configuration, the sprayer 10 continues to move forward with direction and speed 404, and once target T8 is coextensive with the presumed static nozzle assembly 32 (or assemblies) the targeted fertilizer application is initiated at the nozzle assembly 32. However, because the dynamic sprayer boom 38 has swung rearward past dp and is in an aft deflection configuration the nozzle assembly 32 conducts spraying away from target T8 thereby missing (including partially missing) the targeted application of fertilizer.

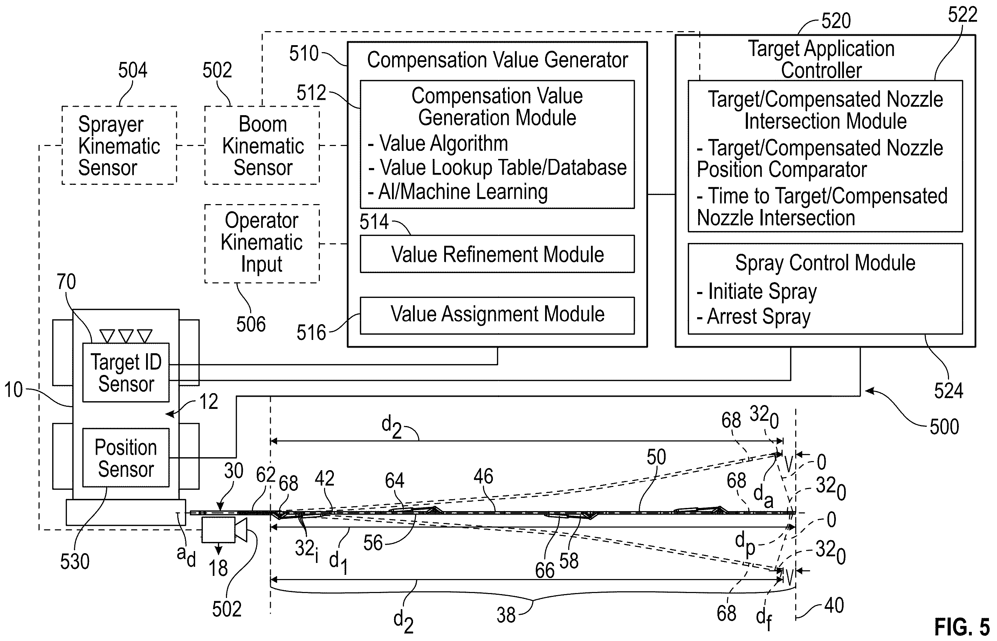

Targeted applications of one or more agricultural products are applied accurately with an application system, for instance with the application system 500 shown in Figure 5. As described herein, the application system 500 generates one or more compensation values that are assigned to one or more of nozzle assemblies (32 in Figures 3 and 4) to enhance application accuracy for targeted application of agricultural products. For example, misapplications as shown in Figures 3 and 4 and discussed herein, are decreased (and accurate targeted applications conversely enhanced) with the generation and application of compensation values with the nozzle assemblies 32, where the compensation values are based on one or more of sensed or input kinematic characteristics of the sprayer 10, sprayer booms 36, 38, associated nozzle assemblies 32 or the like.

Figure 5 is a schematic view of an example application system 500 that generates and assigns compensation values for enhanced accuracy of agricultural product application. Agricultural product application includes, but is not limited to, sprayed agricultural products, such as broad application and targeted (discrete or localized) application targets. Targets include, but are not limited to, crops, weeds, pests, soil, or the like, and agricultural products include fertilizers, herbicides, fungicides, pesticides, nutrient applications, or the like.

The application system 500 is, in this example, coupled with the sprayer 10. As previously discussed, the sprayer 10 includes one or more sprayer booms 36, 38 (38 is shown in Figure 5) and nozzle assemblies 32 associated with the sprayer booms. The application system 500, in various examples, is provided with one or more processors as components of a controller configured to conduct steps for receiving kinematic characteristic inputs (e.g., from sensors, an operator, or the like), generating one or more compensation values based on the kinematic characteristic inputs, and conducting application of an agricultural product, for instance from one or more nozzle assemblies, based on a target and the nozzle assembly (or assemblies) having the compensation value.

As further shown in Figure 5, the application system 500 includes one or more kinematic characteristic inputs. A boom kinematic sensor 502 is a first input example and monitors one or more kinematic characteristics of the sprayer boom 38. The boom kinematic sensor 502 includes, but is not limited to, a camera, camera and one or more fiducials installed along the sprayer boom 38, accelerometer, gyroscope, radar, lidar or the like. The boom kinematic sensor 502 senses one or more kinematic characteristics directly, indirectly or both. In one example, accelerometers, gyroscopes or the like coupled with the sprayer boom 38 measure one or more of acceleration, speed, movement (e.g., vectors), position, rotational permutations of the same, or the like. In some examples, these measured kinematic characteristics are provided directly to a compensation value generator 510 as inputs for generation of one or more compensation values.

In another example, the boom kinematic sensor 502 includes a camera directed along the sprayer boom 38 that measures kinematic characteristics of the boom, for instance by detecting sprayer boom 38 movement. The application system 500 interprets the detected movement and determines one or more position, velocity, acceleration, rotational permutations of the same, pitch, yaw, roll or the like. Optionally, one or more fiducial markers (e.g., recognizable indicia) are coupled with the sprayer boom 38 to enhance detection and monitoring of boom movement. In yet another example, the boom kinematic sensor 502 includes one or more of radar, lidar sensors, or the like coupled with the sprayer boom 38, for instance the one or more sensors 68 shown in Figure 3. The sensors 68 are directed toward one or more features including, but not limited to, crops, ground, or the like. Detected movement of a crop, ground, or the like corresponds to movement of the sprayer boom (e.g., including deflection, boom height changes, or the like) as the crop or ground is in fact static.

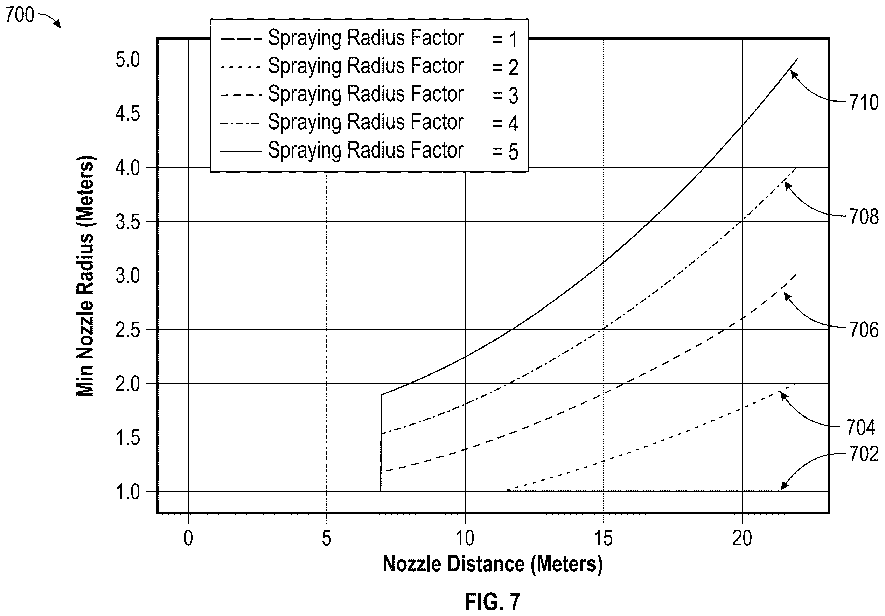

Optionally, kinematic characteristics are determined and input by an operation, for instance with the operator kinematic input 506. In one example, the operator provides a numerical or text based value indicative of predicted sprayer boom kinematics (e.g., kinematic characteristics). These inputs include, but are not limited to, understood terrain characteristics including road, tilled field, planted field (furrows), shallow graded field, steep graded field, sprayer suspension characteristics, boom suspension characteristic, or the like. Each of these inputs is associated with predicted movements or characteristics of those movements for the sprayer boom 38. The inputs are received by the compensation value generator 510 for generation of compensation values that account for the operator input for predicted sprayer boom movement given the agricultural operation, terrain, condition of the field, sprayer suspension characteristics, boom suspension characteristics, or the like. One example of operator input regarding predicted sprayer boom kinematics is shown in Figure 7 with each of the ascending curves corresponding to factors representing expected terrain roughness, grade, suspension characteristics or the like. Accordingly, upper curves are selected for increasingly rough or graded terrain or lower damping coefficients (for suspension), while lower curves are selected for relatively smooth, shallow graded, or higher damping coefficients.

In another example, the application system 500 includes a sprayer kinematic sensor 504 that monitors one or more kinematic characteristics associated with the sprayer 10. The sprayer kinematic sensor 504 is optionally a standalone sensor or is included with the position sensor 530 of the sprayer (e.g., a gyroscope, GPS sensor, RTK sensor, or the like). In some examples, the output of the sprayer kinematic sensor 504 (e.g., detected or determined values of pitch, yaw, roll, changes of the same; velocity; acceleration; or the like) are representative of kinematics of the sprayer 10. In other examples, the output of the sprayer kinematic sensor 504 is representative of the sprayer 10 kinematics but are also imputed or interpreted as kinematics of the attached sprayer booms 36, 38. For instance, a yaw measurement of the sensor 504 represents the yaw behavior of the sprayer 10 including its rotation, rotation speed, rotational acceleration or the like. The yaw measurement of the sensor 504 is, in some examples, indicative of yaw behavior of the sprayer boom 38 extending from the sprayer 10. Optionally, the yaw measurement for the sprayer 10 when imputed as the behavior for the sprayer boom 38 is refined to account for an empirically determined elasticity, mechanical characteristic or the like (collectively, mechanical characteristics) of the sprayer boom 38.

The one or more inputs 502, 504, 506 communicate with a compensation value generator 510. The compensation value generator 510 receives the input values and generates one or more compensation values for use with the spraying operation to account for sprayer kinematics including, but not limited to, one or more sprayer 10 or boom 38 kinematics (e.g., position, change in position; velocity; acceleration; pitch, yaw, roll; deflection; or the like). As shown in Figure 5, the generator 510 includes a compensation value generation module 512 that determines the one or more compensation values based on the input kinematic characteristics. The module 510 includes one or more a value algorithm, lookup table or database, or the like to determine a compensation value based on the input kinematic characteristics (e.g., from one or more of the inputs 502-506). For instance, operator input values have corresponding boom performance compensation values that are graduated based on escalation input values for terrain characteristics, suspension characteristics, or the like. In another example, monitored kinematic characteristics (e.g., sensed, determined, calculated, or the like) of the sensors 502, 504, such as position, velocity, acceleration, pitch, yaw, roll, deflection or the like are received by the module 512 and input to an algorithm of the module 512 to determine the compensation value. The compensation values take a variety of forms, in various examples, including but not limited to, radii with origins at designated nozzle assemblies 32, halo profiles (or bubbles) indexed around nozzle assemblies 32, radii or halo profiles (or bubbles) indexed to targets (e.g., crops, pests, weeds, or the like), numerical values representative of variation in nozzle position, functions that vary the resulting compensation values based on input kinematic characteristics, agricultural operation parameters (e.g., boom height, droplet size, or the like), or the like.

The compensation value generator 510 further includes the capability to refine compensation values. For instance, a value refinement module 514 receives an initial compensation value for the sprayer boom 38 (determined with the kinematic characteristics) and refines that value for application along the boom to each of the nozzle assemblies 32, as shown in Figures 3 and 4. In one example, a compensation value is graduated, or scaled up, for nozzle assemblies 32 positioned distally along the sprayer boom 38 and scaled down for nozzle assemblies 32 proximate to the sprayer 10. As shown in Figure 5, deflection (an example kinematic characteristic) has different values along the sprayer boom 38, with a smaller value of deflection proximate the sprayer 10 and larger values distally. The refinement module 514 optionally refines the compensation value for each nozzle assembly 32 to determine a discrete compensation value for each of the nozzle assemblies. In another example, refinement is conducted beyond graduation, for instance, combinations of determined kinematic characteristics or variations in magnitude of the kinematic characteristics may prompt different refinements. In a first example, deflection of the sprayer boom 38 of FV and AV (see Figure 3) of 4 feet and 3 feet, respectively, in combination with roll of the sprayer boom (e.g., oscillating angling of the boom into and out of the page) of between 20 degrees (up) and 8 degrees (down) prompts larger refinements to the compensation values of the distal nozzle assemblies 32 than the refinements to the proximal nozzle assemblies 32 and varies the refinements relative to deflection or roll alone. In a second example, the same deflection of the sprayer boom 38 of 4 feet and 3 feet along with a boom height change of between 0 and -4 inches (e.g., at a boom sensor location toward the ground or other target) decreases the compensation values of the distal nozzle assemblies 32 because those nozzles are relatively close to the target while the compensation values of the proximal nozzle assemblies 32 are increased because of the boom deflection without the exaggerated boom height change (because the proximal nozzle assemblies are near the sprayer 10 and have a relatively static height in comparison to a target).

In another example, the compensation value generation module 512 generates discrete compensation values for each of the one or more of the respective nozzle assemblies 32 (instead of an initial compensation value that is then refined) thereby doing away with nozzle position based refinements. Optionally, the compensation value refinement is incorporated into the value algorithm, database, lookup table, or the like.

In still another example, the compensation value generation module 512 includes a machine learning or artificial intelligence interface for interpretation of input kinematic characteristics and determination of a compensation value. In a first example, the machine learning interface includes historical data regarding kinematic characteristics (e.g., from the sprayer 10 itself, from model sprayer data accessible from the manufacturer, or the like) and predicts a compensation value based on the historical data. In another example, the machine learning interface includes a generative AI component that generates individual compensation values (instead of predicting) that are based in part on historical data including kinematic characteristics. Optionally, the machine learning interface of the compensation value generation module 512 outputs a model (updates a model, collectively modeling) of one or more of the sprayer boom 38, sprayer 10, both, or the like based on the received kinematic characteristics. The output model (e.g., an algorithm, mathematical function or equation, table or the like) is used by the compensation value generator 510 to output compensation values for the sprayer boom 38 including compensation values for each of the one or more nozzle assemblies 32.

Referring again to Figure 5, in an example the compensation value generator 510 includes a value assignment module 516 that assigns a compensation value to one or more of the sprayer booms 36, 38; component nozzle assemblies 32 (e.g., to each or subsets of the nozzle assemblies); a target (crop, pest, weed, or similar); or the like. For instance, after refinement of a compensation value with the value refinement module, the refined compensation is assigned to a corresponding feature of the sprayer 10, such as the nozzle assembly 32 at the location on the boom 38 that prompted the refinement; or a target for an agricultural product. In the example of assignment of a value to a target the compensation value (e.g., a radii extending from the target, halo profile around the target, function, or the like) represents accounting for kinematic characteristics such as boom deflection, sprayer turns or terrain navigation that precipitate movement of the nozzle assemblies. Instead of assigning the compensation value to the nozzle assemblies the targets receive the compensation values, and as the nozzle assemblies are coextensive with the compensated targets spraying is initiated.

The example application system of Figure 5 further includes a target application controller 520 that initiates and arrests application of the agricultural product based on analysis of the target (e.g., its indexed location) and its intersection with one or more of the nozzle assemblies 32, wherein at least on of the target or the nozzle assemblies has associated compensation values. As described herein, in various examples the compensation values virtually change (e.g., expand, increase, potentially decrease or contract, or the like) the profile of the targets (e.g., T1-T5 in Figure 3, T6-T8 in Figure 4) to enhance intersection between the target and the one or more nozzle assemblies 32 and thereby increase targeted application of the agricultural product to the target while decreasing misapplications. In an example, the profile of the target (e.g., a crop, weed, pest, or the like) is enlarged with a compensation value that includes one or more of a radius that extends from an origin on the target, a halo profile extending around the target, a numerical value (e.g., in inches, meters or the like) corresponding to a range threshold between the target and the nozzle assembly 32. Each of the compensation values effectively expands the footprint (e.g., the target profile) of the target. Accordingly, as one or more of the nozzle assemblies 32 along the sprayer boom 38 arrive and intersect with the footprint of the target spraying is initiated while intersecting. Optionally spraying is conducted for a specified period or until the intersecting condition ends (e.g., the nozzle assemblies depart from the footprint).

In another example, the profiles of one or more of the nozzle assemblies 32 is changed (e.g., expanded, increased, potentially decreased or contracted, or the like) with a compensation value that includes one or more of a radius that extends from the nozzle assembly, a halo profile extending around the nozzle assembly, a numerical value (e.g., in inches, meters or the like) corresponding to a range threshold between the nozzle assembly 32 and the target. The compensation values for the nozzle assemblies effectively expand the footprints (e.g., the nozzle profiles) of the respective nozzle assemblies 32. Accordingly, spraying is initiated as one or more of the nozzle assemblies 32 with the associated compensation value and corresponding footprint (e.g., the nozzle profile) along the sprayer boom 38 arrive and intersect with the target. Optionally spraying is conducted for a specified period or until the intersecting condition ends (e.g., the footprint of the nozzle assembly 32 departs from the target).

As shown in Figure 5, the target application controller 520 includes a compensated target/nozzle intersection module 522 that evaluates intersections between the targets and nozzle assemblies 32 with one or both of the targets or nozzle assemblies 32 including compensation values (e.g., generated with the compensation value generator 510). In a first example, the module 522 includes a comparator that evaluates the position of the target, such as T1-T8 in Figures 3 and 4, relative to the position of one or more nozzle assemblies 32. One or both of the target or the nozzle assemblies 32 includes a compensation value that changes the profile of the respective feature and enhances intersection between the target and the nozzle assembly 32 (or assemblies 32). For instance a first radius is indexed to the nozzle assembly 32, a second radius is indexed to a proximate nozzle assembly (e.g., proximal or distal) as example compensation values by the compensation value generator 510. The first and second radii effectively expand the nozzle profile of the nozzle assemblies 32. The locations of the nozzle assemblies (and changes in location) and their nozzle profiles are determined, in one example, on a position of the sprayer 10 and the position sensor 530 (GPS, RTK, or the like) of the sprayer. The locations of the targets, such as T1-T8, are optionally determined and indexed to the targets as part of a target identification conducted with the sensor 70 as described herein. Accordingly, as the sprayer 10 and the nozzle assemblies 32 move toward the targets the compensated target/nozzle intersection module 522 compares their relative locations and identifies intersections between the targets and nozzle assemblies 32 (one or both having compensation values, such as radii) indicating the nozzle assemblies 32 are coextensive with at least one target.

Upon determination of an intersection by the module 522, spraying of one or more agricultural products is conducted with the nozzle assemblies 32 that intersect (e.g., are coextensive with the nozzle itself or a modified nozzle profile based on a compensation value) with the at least one target. The intersection is, in one example between the target and a nozzle assembly 32. In another example, the intersection is between the target and at least two nozzle assemblies 32, such as nozzle assemblies 32 having compensation values and associated nozzle profiles that at least partially overlap and the overlapped portion intersects with the target. The spray control module 524 initiates and arrests spraying of the target. In a first example, spraying is initiated upon determination of an intersection and is arrested when the intersection ends (e.g. upon departure of the compensated nozzle assembly from the intersection). In another example, spraying is initiated upon determination of the intersection and is conducted for a specified time (e.g., 1 second, two seconds, or the like), for instance, but not limited to, the target profile, the nozzle profile, either adjusted by the compensation value; speed of the sprayer; speed of the activated nozzle assembly 32 or assemblies; or the like).

In another example, the target application controller 520 determines an intersection (e.g., are coextensive) between at least one target and one or more of the nozzle assemblies 32 based on assessing the time of arrival of the associated nozzle assemblies 32 at the target. In this example, a target time of arrival relative to the one or more nozzle assemblies 32 is determined based on the location of the target, such as T3 in Figure 3, and the speed of the sprayer 10, the speed of one or more of the nozzle assemblies 32 (e.g., based on the sprayer speed and kinematics of the sprayer boom 38), or the like. For example, if the time of arrival for the target T3 at the sprayer boom 38 is 7 seconds an intersection is indicated at the expiration of the 7 seconds and spraying is initiated by the nozzle assembly 32 (or assemblies 32) aligned with the target. Determination of the nozzle assemblies 32 aligned with the target (T3) is, in an example, calculated based on the location of the target, the location of the sprayer 10, the locations of the nozzle assemblies 32 (e.g., relative to the location of the sprayer 10). At expiration of the time of arrival the spray control module 524 initiates sprayed application from the one or more nozzle assemblies 32 aligned with the target. After a specified time from initiation of spraying the spraying is arrested. The specified time is based on one or more of the target profile, the nozzle profile, either or both adjusted by the compensation value; speed of the sprayer; speed of the activated nozzle assembly 32 or assemblies; or the like).

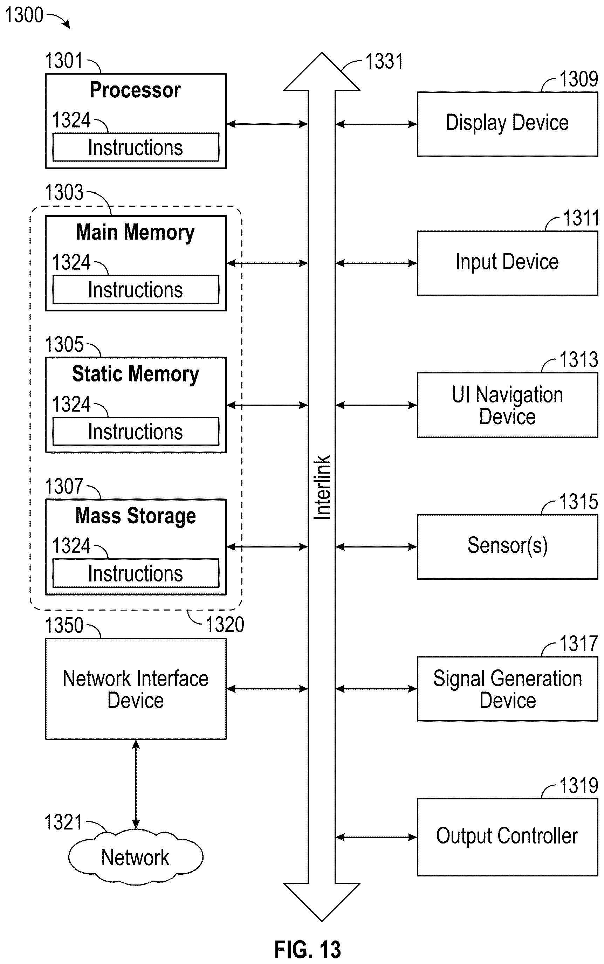

In another example, the time of arrival is modified based on the compensation values described herein. In one example, kinematic performance of one or more of the sprayer 10, sprayer boom 38, or the like is monitored and the position, speed, or the like of one or more of the sprayer boom 38, the associated nozzle assemblies 32, or the like is accounted for in a revision of the time of arrival. Accordingly, the monitored position, speed, or the like correspond to a compensation value that changes the initial time of arrival. For instance, in a circumstance with the sprayer boom 38 swinging forward (relative to the sprayer 10) proximate to the initial time of arrival (7 seconds) the initial time of arrival is refined based on the compensation value associated with the nozzle assemblies, such as 0.2 seconds, 0.5 seconds, or the like based on the speed and direction of movement of the nozzle assemblies 32. Because the sprayer boom 38, in this example, is moving forward relative to the sprayer 10 (e.g., at 1 mile per hour, 2 miles per hour or the like) the initial time of arrival is modified to a compensated value for the time of arrival of 6.8 seconds, 6.5 seconds or the like. Upon expiration of the compensated value of the time of arrival spraying is initiated and subsequently arrested with the aligned one or more nozzle assemblies 32. An example of time of arrival and modification of the time of arrival to determine intersection between nozzle assemblies 32 and the sprayer boom 38 is shown in Figure 13 and described herein.

In other examples, the kinematic characteristics of one or more of the sprayer 10, sprayer boom 38 (including its associated nozzle assemblies 32) from the sensors 502, 504) are input and modeled with the compensation value generation module 512, for instance an artificial intelligence or machine learning interface. The model (e.g., a function) is used with the compensation value generator 510 to determine compensation values. In another example, operation kinematic inputs, provided through the operator kinematic input 506 are inputs for AI or machine learning modeling with the module 512 to determine one or more compensation values. In still other examples an algorithm, lookup table, or database of the compensation value generation module 512 determines compensation values based on the input kinematic characteristics.

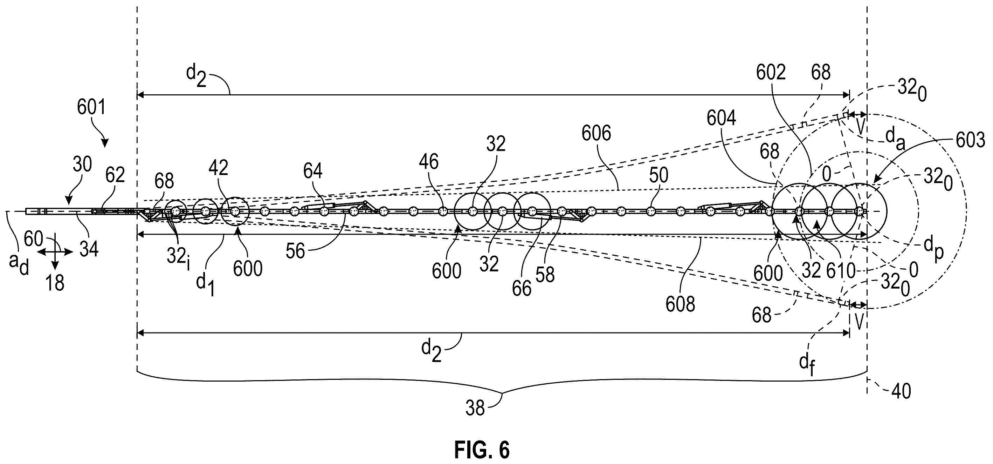

Figure 6 is a schematic view of the sprayer boom 38 including a plurality of compensation values graphically shown as halo profiles 600 assigned to nozzle assemblies 32. The sprayer boom 38 extends from a boom proximal end 601 (proximate the sprayer 10, shown in Figure 3) to a boom distal end 603. Nozzle assemblies 32 are distributed along the boom 38, for instance at an increment, such as 12 inches, 16 inches, or the like.

As shown in Figure 6, and previously described herein, the sprayer boom 38 moves relative to the sprayer 10. For example, the sprayer boom 38 moves and thereby changes position, speed, acceleration or the like (including, but not limited to, pitch, yaw, roll). In some examples, sprayer boom 38 movement is referred to as deflection (e.g., deformation, bending, curving, articulating, or the like). Examples of forward and rearward deflection are shown in Figure 6 and are similarly shown in Figures 3-5.

Figure 6 provides an example of compensation graduation boundaries 608 extending from the boom proximal end 601 to the boom distal end 603. In the present example the compensation graduation boundaries 606, 608 are represented with dashed lines that are based on kinematic characteristics of either or both of the sprayer boom 38 or the sprayer 10. For instance, operator input kinematic characteristics (see operator kinematic input 506 in Figure 5), or monitored boom or sprayer kinematic characteristics (see inputs 502, 504) are input and the compensation graduation boundaries 606, 608 are determined by the compensation value generation module 512 in Figure 5. For example, with monitored or input kinematic characteristics representing moderate forward and backward movement the compensation graduation boundaries 606, 608 are set as shown with the dashed lines in Figure 6.

Halo profiles 600, as examples of compensation values, are assigned to the nozzle assemblies 32 according to the respective positions of the nozzle assemblies 32 along the boom. In the example shown, the halo profiles 600 gradually increase from the boom proximal end 601 to the boom distal end 603, for instance according to refinements. Optionally, the refinements are determined based on functions, modeling, or the like (see the value refinement module 514 in Figure 5). In one example, the function, model, or the like that refines the halo profiles 600 is shown graphically with the compensation graduation boundaries 606, 608. Example refinements 602, 604 for a distal nozzle assembly 32 are shown in Figure 6.

As previously described, in various examples the nozzle assemblies 32 including the associated compensation values are assessed for intersections between one or more identified targets (e.g., T1-T8 as shown in Figures 3 or 4). Intersections are determined with analysis of time to intersection between compensated nozzle assemblies and the target, comparison of compensated nozzle assembly position with the target position, or the like, as shown in Figure 5 and discussed herein. Upon determination of an intersection between the target and the nozzle assembly 32, with one or both having compensation values, such as halo profiles 600, spraying is initiated from the intersecting nozzle assemblies 32. Optionally, for example, with nozzle assemblies 32 having compensation values (numerical values, radii, profiles, or the like) that overlap spraying is conducted from each of the nozzle assemblies 32 with associated compensation values that intersect with the target. For instance, as shown in Figure 6 an intersection of a target crop, weed, or the like with the overlapping portion 610 of nozzle assemblies 32 having the halo profiles 600 initiates spraying by both of the associated nozzle assemblies 32. In some examples, spraying with both of the nozzle assemblies 32 compensates for less dense spraying along the periphery of nozzle spray profiles that is less dense in comparison to the central spraying of the nozzle spray profiles.

In other examples, compensation values like those shown in Figure 6 are indexed to the targets (e.g., T1, T2, etc.) and escalate in magnitude based on functions, models, or the like. For instance, the compensation values, halo profiles being one example, of the targets T1 to T8 are assigned to the targets and refined based on their alignment relative to the sprayer boom so that targets proximate to the boom proximal end 601 having a smaller compensation value (e.g., halo profile) in comparison to targets proximate to the boom distal end 603.

With escalated kinematic characteristics the boundaries 606, 608 are, in one example, expanded. For instance, the boundaries 606, 608 as the dashed lines are pivoted (606 counter clockwise, 608 clockwise) to have increased angles relative to those shown in Figure 6. In one example, the compensation graduation boundaries 608 are angled (with the escalated kinematic characteristics) and wider relative to those shown, for instance with the boundaries 606, 608 extending from the boom proximal end 601 to the refinement 602. Stated another way, the refinement 602 to the halo profile 600 of the distal most nozzle assembly 32 in Figure 6, has the larger radius compared to the initial value, and the larger radius of the halo profile 600 with the refinement 602 is based on the expanded boundaries 608, 608. In a further example, for instance having kinematic characteristics reflected with the greatest forward and rearward deflection of the sprayer boom 38 in Figure 6 (see the dashed line depictions of the deflected sprayer boom) The compensation graduation boundaries 606, 608 are further expanded, and accordingly the distal most nozzle assembly 32 includes a halo profile 600 with the refinement 604 (dot dash line). In the examples shown the halo profiles 600 and refinements 602, 604 of the same are exaggerated for illustration purposes. In other examples, the linear compensation graduation boundaries 606, 608 are not straight lines and instead include curved shapes reflecting increased deflection magnitude from the boom proximal end 601 to the boom distal end 603. In still other examples, forward compensation graduation boundary 606 (upper boundary in Figure 6) differs from the rearward compensation graduation boundary 608 (lower boundary in Figure 6). For example, in circumstances with greater forward kinematic characteristics (greater forward deflection, speed, or the like) in comparison to rearward kinematic characteristics the forward compensation graduation boundary 606 has one or more of a greater angle, curvature, or the like relative to the rearward compensation graduation boundary 608.

Figure 7 is a plot of one example of a compensation value chart 700. The compensation value chart 700 is, in one example, interacted with by an operator, for instance with the operator kinematic input 506. For instance, the chart 700 is provided on a touchscreen to permit selection of kinematic profiles 702, 704, 706, 708, 710. Optionally, the user is provided touch screen or key options reflecting each of the profiles 702-710. For instance, text based identifiers such as low, low-medium, medium, medium-high, and high are provided for the respective profiles 702-710. The identifiers and associated kinematic profiles correspond to a likelihood of intersection between sprayer nozzle assemblies with larger compensation values drawn from profiles (e.g., 710, 708, 706) in comparison to smaller compensation values drawn from other profiles (e.g., 702, 704). In another example, the compensation value chart 700 is included with the compensation value generation module 512 of the compensation value generator 510 shown in Figure 5. For instance, the chart 700 is included a lookup table, database, or the like to facilitate the generation of compensation values for the nozzle assemblies 32.

The compensation value chart 700 includes kinematic profiles 702, 704, 706, 708, 710 that correspond to escalating compensation values for a sprayer boom and the associated nozzle assemblies, such as the sprayer boom 38 and the nozzle assemblies 32 distributed along the sprayer boom 38. The vertical (Y) axis of the chart 700 includes increasing compensation values. In this example, the chart includes nozzle radii as the compensation values starting at 1 meter and progressing to 5 meters. The nozzle radii in an example, correspond to the dimensions of a halo profile 600 (see Figure 6) with the associated radius from the chart 700. The horizontal (X) axis includes nozzle assembly distance, for instance from the boom proximal end 601.

In one example, the operator selects one of the kinematic profiles 702-710 based on observations of the field (terrain, grade, end of row turns, in row turns or linearity of the rows), the agricultural product for spraying, weather conditions (wind, humidity, or the like), experience with the performance of the sprayer 10 (e.g., suspension, drive, boom performance), or the like. The compensation value generation module 512 determines compensation values for the nozzle assemblies 32 based on the selected boom profile.

Using the kinematic profile 704 as an example, at 0.0 meters to 12 meters from the boom proximal end 601 the associated radii for the compensation values are 1.0 meters. Accordingly, in an example like that shown in Figure 6, compensation values for halo profiles 600 of 1.0 meters for each of the nozzle assemblies 32 from 0 to 12 meters from the boom proximal end 601 (see Figure 7) are indexed to those assemblies 32. Referring again to Figure 7 and the kinematic profile 704, for nozzle assembly 32 distances of greater than 12 to 23 meters the compensation values are escalating radii starting at 1.0 meters and progressing along the curve of the profile 704 to 2.0 meters. The nozzle assemblies 32 of the sprayer boom have compensation values (radii of halo profiles in this example) that are consistent for a proximal portion of the sprayer boom from 0 to 12 meters and are graduated with increasing compensation values (radii) from 12 to 23 meters (the distal end portion 603).

In another example, kinematic profile 708 is selected and includes compensation values that account for increased movement of the sprayer boom 38 (e.g., greater deflection, swing, pitch, yaw, roll, rates of change of the same, or the like) in comparison to the profiles 702, 704, 706. In this example, for profile 708 radii of 1.0 meters as compensation values for halo profiles 600 for each of the nozzle assemblies 32 from 0 to 7 meters from the boom proximal end 601 (see Figure 7) are indexed to those assemblies 32. Referring again to Figure 7 and the kinematic profile 708, for nozzle assembly 32 distances of greater than 7 to 23 meters the compensation values are escalating radii starting at 1.0 meters and progressing along the curve of the profile 708 to 4.0 meters. The nozzle assemblies 32 of the sprayer boom have compensation values (radii of halo profiles in this example) that are consistent for a proximal portion of the sprayer boom from 0 to 7 meters and are graduated with increasing compensation values (radii) from 7 to 23 meters (the distal end portion 603).

In still other examples, a compensation value associated with a nozzle assembly 32 includes a profile (e.g., radius, bubble, halo, or the like) and an instruction that initiates spraying from the base nozzle assembly 32, as well as other nozzle assemblies 32 (e.g., assemblies adjacent, proximate to, in the same section of a boom, or the like) that may not otherwise intersect with the target even with their own nozzle assembly associated compensation values. Accordingly, an operator that desires ensuring coverage of the target includes the associated instruction to provide a broad, but still targeted, application of the agricultural product.

In another example, the compensation value chart 700 is included with the compensation value generation module 512 of the compensation value generator 510 in Figure 5 as a lookup table or database. Alternatively, the chart 700 is provided in the form of one or multiple functions or an algorithm incorporating functions. In one example, the operator (at input 506) selects an expected kinematic behavior for the sprayer 10, such as smooth, irregular, rough, ultra-rough or the like and the module 512 determines compensation values from the chart 700 with profile 702 corresponding to 'smooth', profile 710 corresponding to 'ultra-rough', and so on. In another example, the application system 500 includes one or more of the sprayer or boom kinematic sensors 504, 502, and the values output by the sensors are received by the compensation value generator 510, corresponded to the chart 700 (including algorithms or functions based on the chart), and the compensation values and refinements are determined, for instance with the module 512 and value refinement module 514.

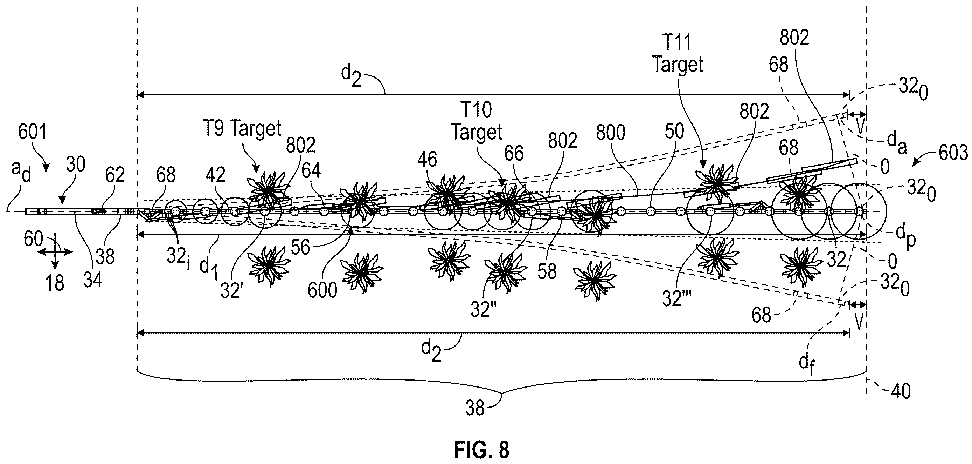

Figure 8 is a schematic view of the sprayer boom 38 with nozzle assemblies 32 in a field having targets T9-T11 designated for one or more targeted applications of agricultural products upon intersection (e.g., coextension of the nozzle, nozzle having a compensation value, or the like) of nozzle assemblies 32 with the targets. In this example, the compensation values are included with the respective nozzle assemblies 32. For instance, halo profiles 600, as examples of compensation values, are indexed to respective nozzle assemblies 32. As previously described the halo profiles 600 and their optional refinements are determined based on kinematic characteristics of one or more of the sprayer 10, sprayer boom 38, or both. For instance, the halo profiles 600 are determined based on kinematic characteristics input by one or more of the operator (e.g., input 506), determined from kinematic sensors (502, 504), or the like. The halo profiles are determined with the compensation value generator 510 (e.g., the module 512) and optionally refined (with the value refinement module 514). For instance, in the example shown in Figure 8, the halo profiles 600 have increasing radii from the boom proximal end 601 to the boom distal end 603.

In the example shown in Figure 8 the sprayer boom 38 and the associated halo profiles 600 are presumed static. For instance, during operation the sprayer boom 38 is presumed to not deflect (though in actuality it does deflect). Instead, the halo profiles 600 are determined in part from kinematic characteristics to permit accurate spraying of targets (e.g., crops, weeds, or the like) based on the sprayer boom 38 being presumed static. The presumed static sprayer boom 38 is shown in Figure 8 as the solid line version of the sprayer boom 38 having the associated halo profiles 600. In Figure 8 halo profiles 600 (compensation values) are indexed to a plurality of nozzle assemblies 32. In other examples, halo profiles 600 are indexed to each of the nozzle assemblies 32.

In the Figure 8 example, the sprayer boom 38 is in operation and its actual deflection is illustrated with the deflected sprayer boom 800 shown with a broken line (e.g., dot-dash broken line). Further, some of the nozzle assemblies 32 are shown with spray profiles 802 emanating from the actual locations of the nozzle assemblies 32 on the deflected sprayer boom 800 in contrast to the locations of the nozzle assemblies 32 shown on the presumed static sprayer boom 38. A subset of spray profiles 802 are shown to facilitate explanation.

With the compensation values (halo profiles 600 in this example) indexed to nozzle assemblies 32 on the presumed static sprayer boom 38 targeted application is conducted without ongoing monitoring of sprayer boom 38 movement (e.g., deflection forward, backward, pitch, yaw, roll, or the like). Instead, the halo profiles 600 account for kinematic characteristics and enlarge the opportunity for spraying of targets. For instance, as the sprayer 10 moves through the field and approaches targets T9-T11 the sprayer boom 38 actually moves in a manner consistent with the illustrated deflected sprayer boom 800. However, targeted application of the agricultural product is conducted with the target application controller 520 (see Figure 5) and the presumed static sprayer boom 38 having compensation values, such as halo profiles 600 indexed along the static sprayer boom 38. Accordingly, as the sprayer 10 approaches the targets, the position of the targets T9-T11 are monitored as are the positions of in-line nozzle assemblies 32 and halo profiles 600 along the static sprayer boom 38.

For instance, the positions of the nozzle assemblies 32 and the associated halo profiles 600 are readily determined based on trigonometric functions (e.g., sine, cosine, and tangent) in comparison to the sprayer 10. One or more of complex monitoring or modeling of sprayer boom 38 movement is avoided. The positions of the (static) nozzle assemblies 32 and halo profiles 600 are compared with the positions of the targets T9-T11. Upon intersection of the halo profiles 600 with one or more of the targets T9-T11 spraying is initiated from the respective nozzle assembly 32 (e.g., 32', 32", 33"' in Figure 8). As shown with target T9 upon intersection with the halo profile of the nozzle assembly 32' spraying is initiated, and is illustrated in Figure 8 with the spray profile 802 as emanating from the (actual) deflected sprayer boom 800. Similarly, with target T10 spraying is initiated with intersection of the halo profile 600 associated with nozzle assembly 32" to target T10. As shown, upon initiation the spray profile 802 emanating from the (actual) deflected sprayer boom 800 contacts target T10. Further, with nozzle assembly 32‴ and its associated refined (larger) halo profile 600 spraying is initiated with intersection between the refined halo profile 600 and the target T11. The spray profile 802, once initiated, emanates from the deflected sprayer boom 800 to target T11. In each of these examples, the sprayer boom 38 is presumed static and the halo profiles 600 permit accurate targeted spraying of the targets T9-T 11 that are at least partially misaligned with the static sprayer boom 38, but are intersecting the associated halo profiles 600, to conduct spraying from the (actual) deflected sprayer boom 800. The compensation values associated with the nozzle assemblies 32 thereby permit targeted application with a presumed static sprayer boom 38 (e.g., for ease or lack of monitoring) while the sprayer boom 38 is moving.

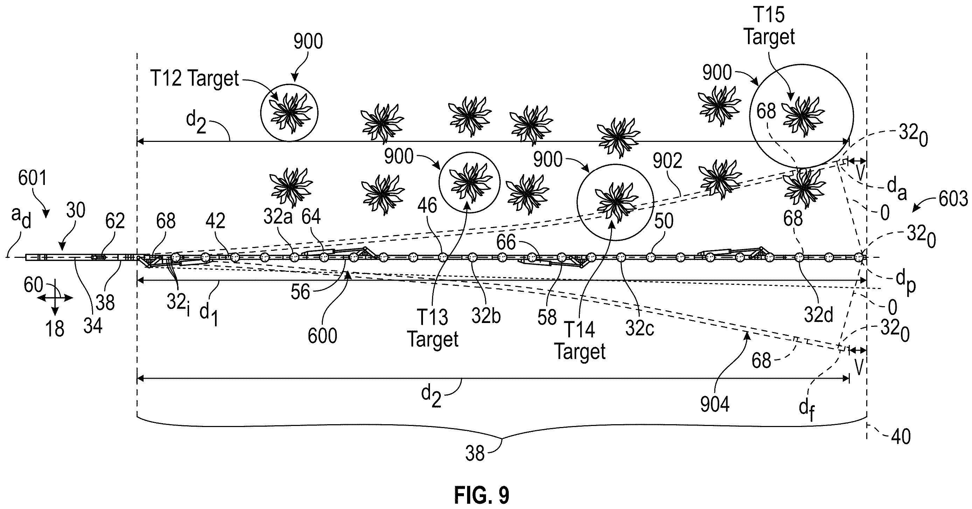

Figure 9 is a schematic view of the sprayer boom 38 in a field having targets T12-T15 designated for one or more targeted applications of agricultural products upon intersection (e.g., coextension of the nozzle, nozzle having a compensation value, or the like) of nozzle assemblies 32 with the targets. In this example compensation values are associated with each of the targets T12-T15 in contrast to the nozzle assemblies 32 (as in Figure 8). As shown in the present example, the compensation values are graphically illustrated with halo profiles 900. Optionally, the compensation values (halo profiles 900) are different for one or more of the targets T12-T15, for instance in Figure 9 the profiles 900 increase in one or more of size, shape, or the like from near the boom proximal end 601 to the boom distal end 603. The variation in the compensation value is in one example determined with the value refinement module 514 of the compensation value generator 510 (e.g., one or more processors configured to conduct the operations noted herein). For example, the targets T12-T15 laterally positioned relative to the sprayer boom 38 and the value refinement module 514 determines refinement values for each of the targets based on the kinematic characteristics provided by one or more of the inputs 502, 504, 506 in Figure 5. In one example, the one or more lateral positions of the targets T12-T15 are compared and related to corresponding portions of the sprayer boom, and the kinematic characteristics and the related positions of the targets permit determination of one or more refinements for the compensation values (e.g., accordingly to an algorithm, model, lookup table, database, AI or machine learning interface, or the like).

In still other examples, the compensation values associated with the targets T12-T15 are determined based on profiles of the targets, for instance the profile of the canopy. Accordingly, a perimeter, profile shape and size, radius, or the like for the target is determined as the compensation value and associated with the respective target T12-T15. Optionally, the compensation values are refined (e.g., with the value refinement module 514 shown in Figure 5), for instance, based on relative position of the target relative to the boom (e.g., proximal to distal), boom kinematic characteristics, sprayer kinematic characteristics, operator kinematic input (e.g., 502, 504, 506 in Figure 5). In one example, a target located proximate the boom distal end has a compensation value initially corresponded to its canopy dimensions (e.g., shape, size, perimeter, radius, in the manner of a halo profile, or the like) and is refined to a larger value based on one or more of the distal position of the nozzle assembly 32 (or nozzle assemblies 32 proximate to the target location along the boom), boom kinematic characteristics of the nozzle assembly 32 (or assemblies 32). Accordingly, the target has a larger profile for the determination of intersection with one or more nozzle assemblies, in comparison to base cartesian coordinates. Instead, the target includes a compensation value representative of at least its profile, perimeter, dimensions, portions thereof (such as its canopy) or the like.

In operation, as the sprayer 10 and sprayer boom 38 approach the targets T12-T15 one or more of positions of the nozzle assemblies 32 and the targets T12-T15 with associated compensation values (900) are compared. Upon intersection between one or more of the targets T12-T15, including the associated compensation values, such as halo profiles 900, and one or more nozzle assemblies 32 spraying of the agricultural product is initiated in a manner similar to that shown in Figure 8. In an example, spraying is conducted for a specified time and then arrested. In another example, spraying is conducted until the intersection ends between the target (with compensation value) and the associated sprayer nozzle 32, for instance upon departure of the activated nozzle assembly 32 from the target (one or more of T12-T15) or its halo profile 900 (e.g., no longer coextensive). In Figure 5, the target/compensation nozzle intersection module 522 compares the locations of the targets and nozzle assemblies 32 and the spray control module 524 initiates and arrests spraying.

In another example, intersections between the targets T12-T15 and the nozzle assemblies 32 are determined based on determination of an arrival time to the target (with its compensation value) for one or more nozzle assemblies 32 in line with the target, for instance based on the kinematics of one or more of the sprayer 10, sprayer boom 38, or the like. Optionally, the compensation values (shown with halo profiles 900 in Figure 9) are instead provided with other values, such as temporal values that adjust times of arrival. For instance, if the time of arrival for T13 is 9 seconds, the compensation value for the target relative to the one or more aligned nozzle assemblies on a forward swinging boom is 8.7, or stated differently 9 seconds minus 0.3 seconds (0.3 seconds the compensation value because of the forward swing).

As previously discussed, the target/compensation nozzle intersection module 522 optionally determines and monitors the arrival time. Upon expiration of the time of arrival between the target, including the compensation value, and the one or more nozzle assemblies 32 in line with the target spraying is conducted and subsequently arrested (e.g., upon expiration of a specified spray period, expiration of a time of departure determined similar to the time of arrival). In a similar example, with the permutation shown in Figure 8 the application system 500 (Figure 5) optionally determines intersections between targets T19-T11 based on determination of an arrival time between the nozzle assemblies 32 (having compensation values, such as halo profiles 800) and the targets. For instance, expiration of arrival time and compensation values associated with the same (e.g., based on sprayer 10 kinematics, sprayer boom 38 kinematics, or the like)

In still another example, the sprayer boom 38 and its nozzle assemblies 32 in Figure 9 are presumed static in a similar manner as previously discussed in regard to Figure 8. For instance, during operation the sprayer boom 38 is presumed to not deflect (though in actuality it does deflect). Instead, the locations of nozzle assemblies 32 or times of arrival to a target for the assemblies 32 are determined in part from kinematic characteristics to permit accurate spraying of targets (e.g., crops, weeds, or the like). The presumed static sprayer boom 38 is shown in Figure 9 as the solid line (horizontal) version of the sprayer boom 38.

In the Figure 9 example, the sprayer boom 38 is in operation and its actual deflection is illustrated with the deflected sprayer boom 902 shown with broken lines (e.g., dot-dash broken line). With the compensation values (halo profiles 900 in this example) indexed to the targets T12-T15 targeted application is conducted without ongoing monitoring of sprayer boom 38 movement (e.g., deflection forward, backward, pitch, yaw, roll, or the like). Instead, the halo profiles 900, indexed to the targets T12-T15, account for kinematic characteristics and enlarge the opportunity for spraying of targets. For instance, as the sprayer 10 moves through the field and approaches targets T12-T15 the sprayer boom 38 actually moves in a manner consistent with the illustrated deflected sprayer boom 902. However, targeted application of the agricultural product is conducted with the target application controller 520 (see Figure 5) and the presumed static sprayer boom 38. Accordingly, as the sprayer 10 approaches the targets, the position of the targets T12-T15 and their compensation values (e.g., halo profiles 900 or related temporal values) are monitored as are the positions of in-line nozzle assemblies 32 along the (presumed) static sprayer boom 38.

As discussed in regard to Figure 8, the positions of the nozzle assemblies 32 are readily determined based on trigonometric functions (e.g., sine, cosine, and tangent) in comparison to the sprayer 10. One or more of complex monitoring or modeling of sprayer boom 38 movement is avoided. The positions of the (static) nozzle assemblies 32 are compared with the positions of the targets T12-T15 (including their associated compensation values). Upon intersection of the nozzle assemblies 32 with one or more of the targets T12-T15 including the target itself, halo profile 900, temporal compensation value, or the like, spraying is initiated from the respective nozzle assembly 32 (e.g., 32a, 32b, 32c, 32d in Figure 9). Optionally, upon intersection of the halo profile 900 with multiple nozzle assemblies, such as the nozzles adjacent to assembly 32d, spraying is also initiated from those assemblies. In the example shown in Figure 9, the larger halo profiles 900 (e.g., toward the boom distal end 603) are intersected by more nozzle assemblies 32 thereby enhancing the application of the agricultural product. This compensates for the generally greater kinematic variations toward the boom distal end 603 relative to the proximal end 601, and thereby ensures outlying targets receive adequate spray application.

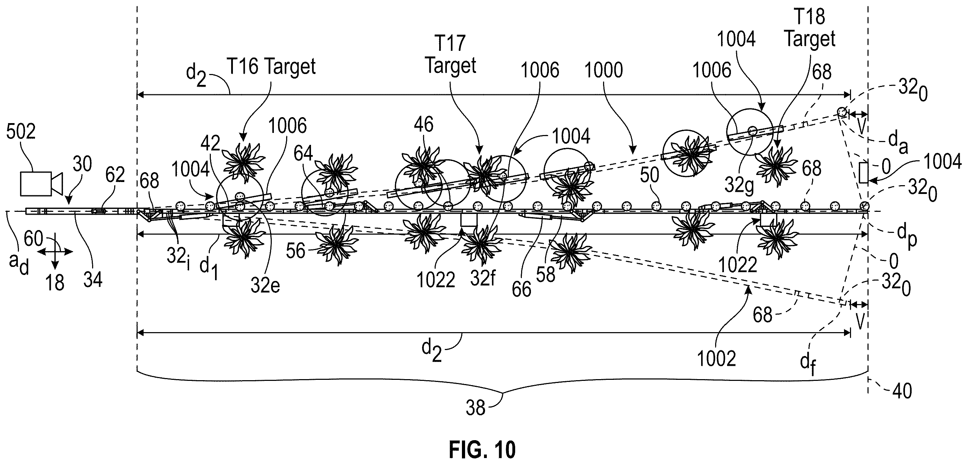

Figure 10 is another schematic view of the sprayer boom 38 showing the sprayer boom in various deflected configurations 1000, 1002. Deflected configuration 1000 corresponds to a forward deflected configuration and deflected configuration 1002 is a rearward deflected configuration. In this example, one or more of the position, speed, direction of movement, acceleration, or the like of the sprayer boom 38 are received by the target application controller 520 to enhance the accuracy of targeted application of agricultural products (e.g., to targeted crops, weeds, pests, or the like). Accordingly, instead of presuming the sprayer boom 38 is static and compensating for boom kinematic characteristics with the compensation values, the present example of the application system 500 monitors one or both of sprayer boom 38 or sprayer 10 kinematics (e.g., movement) and conducts targeted spraying based on the monitored kinematics while at the same time also including compensation values as discussed herein (e.g., numerical compensation values for radii, distance, time; profiles, such as halo profiles; or the like).

As shown in Figure 10, targets T16-T18 are distributed laterally relative to the sprayer boom 38. With the example 1000 (forward) deflected configuration of the boom 38 (shown with dashed lines), targets T16 and T17 are positioned forward of the deflected boom 38 while target T18 is rearward of the deflected boom 38. The actual spray profiles 1006 are illustrated for the nozzle assemblies 32 (e.g., 32e, 32f, 32g) along the deflected sprayer boom 38 and proximate to the targets T16-T18. Each of the nozzle assemblies 32 include compensation values, in this example halo profiles 1004, indexed to the nozzle assemblies 32 at the respective positions along the sprayer boom 38, as deflected. For instance, with the sprayer boom 38 in the deflected configuration 1002 (rearward) each of the targets T16-T18 are forward of the sprayer boom 38, the associated nozzle assemblies 32 and the compensation values indexed to rearward positioned nozzle assemblies 32. In contrast, the compensation values in Figure 8 (halo profiles 600) are indexed to the presumed static positions of the nozzle assemblies 32 (e.g., 32', 32", and so on) along the presumed static boom 38.

In operation the sprayer boom 38 moves relative to an initial position shown in solid lines in Figure 10, for instance because of sprayer 10 turns, uneven terrain, grades, articulation of the boom 38, boom height adjustments, or the like. Example deflections of the sprayer boom 38 are shown in Figure 10, and are based on kinematic characteristics of the sprayer boom 38, sprayer 10, both, or the like. Monitoring of the sprayer boom 38, the nozzle assemblies 32, both, or the like is conducted with one or more sensors, such as the boom kinematic sensor 502, sprayer kinematic sensor 504 (monitoring sprayer 10 kinematics and processed to determine boom kinematics), or the like. In an example including the boom kinematic sensor 502 the sensor is directed along the sprayer boom 38 and, with the application system 500 (e.g., processors of the same), kinematic characteristics of the sprayer boom 38 are determined including one or more of, position, speed, direction of movement, acceleration, pitch, yaw, roll, curvature, rates of change of the same, or the like. Optionally, one or more boom fiducials 1004 are positioned along the sprayer boom 32, and are readily detected and tracked with the boom kinematic sensor 502, such as a camera, video camera, or the like, for instance to streamline image processing and determination of boom kinematic characteristics.

In another example, boom kinematic sensors 1022 are positioned along the sprayer boom 32. In these examples, the boom kinematic sensors 1022 include one or more of, radar, lidar, ultrasound or the like. The sensors 1022 are directed toward the ground, forward, or backward relative to the boom. The sensors 1022 detect objects spaced from the sprayer boom 32, such as crops, soil, obstacles or the like (including potentially the targets described herein). Because the objects are static (e.g., planted crops, soil, fence posts, or the like) movement detected by the boom kinematic sensors 1022 is readily converted to movement of the sprayer boom 32. For instance, a crop, such as target T18, that appears to the sensor 1022 to approach the sensor instead indicates the sprayer boom 32 is moving forward (once compensated for sprayer 10 movement). In other examples, the boom kinematic sensors 1022 include one or more radar, lidar, ultrasound of the like that emanate signals and interpret their reflections (e.g., from targets, other crops, or the like). In these examples, one or more of doppler shift (in units of hertz) and phase shift (in units of degrees) are analyzed to determine speed and direction of movement of the sprayer boom 38, respectively. Values of speed and direction for each of the sensors 1022 are then graduated for the nozzle assemblies 32 based on their positions along the boom 38.

Referring again to Figure 5, as the sprayer 10 and sprayer boom 38 with the associated nozzle assemblies 32 (including assemblies 32e, f, g) navigate a field one or more forces, moments or the like are experienced by the sprayer boom 38. These forces and moments cause various deflections of the sprayer boom 38 relative to the targets T16-T18 including. The deflections are represented by one or more of position, velocity (speed and direction of movement), acceleration, pitch, yaw, roll, twisting, curvature, changes in the same, or the like as discussed herein. Accordingly the sprayer boom 38 and its nozzle assemblies 32 move relative to the targets during agricultural operations.

The application system 500 includes the target application controller 520. The target application controller 520 (e.g., one or more processors), for instance with the target/compensated nozzle intersection module 522, analyzes information about the targets, such as T16-T18, such as their indexed positions or times of arrival relative to the sprayer 10, sprayer boom 38, or the like and also analyzes information about the sprayer boom 38 and the associated nozzle assemblies 32, such as one or more of the position, velocity (speed and direction), acceleration, or other kinematic characteristics to determine its position, times of arrival at the forthcoming targets T16-T18, the inverse (times of arrival for the targets at the associated nozzles).

In one example, one or more of the sprayer kinematic sensors 504, boom kinematic sensors 502 (or 1022 in Figure 10), or the like monitor kinematics of the sprayer 10, boom 38, associated nozzle assemblies 32, and determine one or more of the position or movement of the sprayer boom 38. The determined position, movement or the like of the sprayer boom 38 permits accurate comparison with the positions of the targets T16-T18. For instance as the nozzle assemblies 32 with compensation values (such as the halo profiles 1004 in Figure 10) intersect with one or more of the targets T16-T18 spraying is initiated from the respective nozzle assemblies 32. As previously discussed, spraying is conducted from the nozzle assemblies 32 for a specified time (e.g., 0.5 seconds, 1 second, speed dependent time) or until intersection between the target and the respective nozzle assembly 32 ends. As shown in Figure 10, because the nozzle assemblies 32 (e.g., 32e, f, g) have indexed positions based on the monitored kinematics the halo profiles 1004 are indexed to those nozzle assemblies 32, for instance in the boom deflected configurations 1000, 1002, Enhanced accuracy of target application is accordingly accomplished with the determined positions of the nozzle assemblies 32 and comparison of those nozzle assembly positions and compensation values associated with the nozzle assemblies 32 relative to the targets (in comparison to Figure 8).

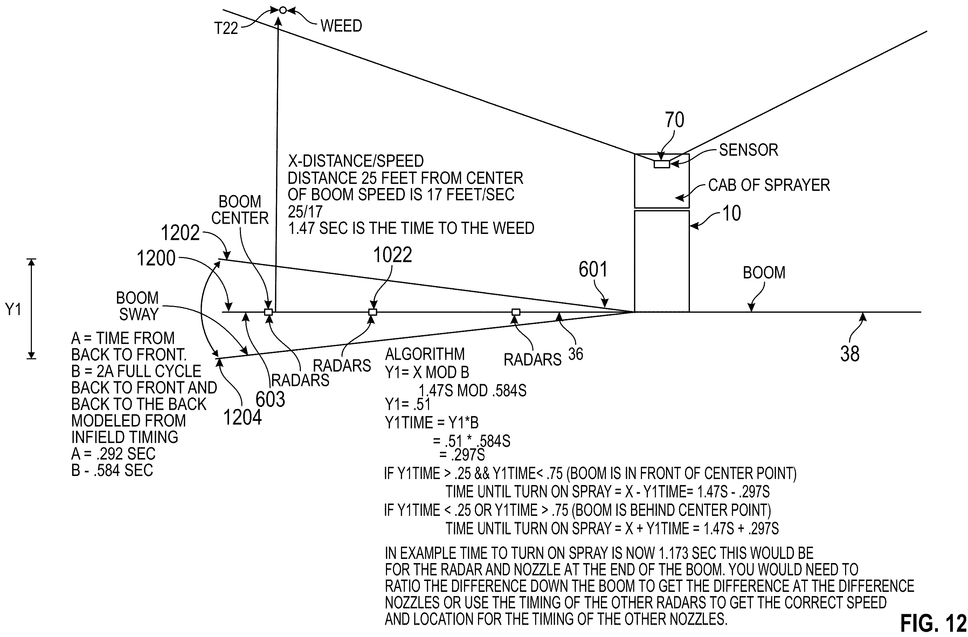

In another example, for instance with times of arrival for the targets T16-T18 received at the target application controller 520 the sprayer kinematic sensors 504, boom kinematic sensors 502 (or 1022 in Figure 10), or the like and the monitored kinematics of the sprayer 10, boom 38, associated nozzle assemblies 32 permit enhanced determination of times of arrival and expirations of the same (to initiate spraying). For example, a time of arrival of 4 seconds between T17 and the nozzle assembly 32f (and potentially adjacent nozzles having an intersection with T17) is compensated with a compensation value based on movement of the sprayer boom 38 and the nozzle assembly 32f. For instance, if the sprayer boom 38 is swinging forward from the deflected configuration 1000 (e.g., at a forward directed speed relative to the sprayer 10) a compensation value of -0.5 seconds is applied to the nozzle assembly 32f dependent on the speed of the sprayer nozzle 32f to accordingly decrease the time of arrival to 3.5 seconds and thereby initiate spraying upon expiration of the 3.5 seconds when nozzle assembly 32f intersects with target T17. Conversely, if the sprayer boom 38 is swinging backward from the deflected configuration 1000 the compensation value is instead +0.5 seconds the time of arrival is adjusted to 4.5 seconds for initiation of spraying. In further examples, oscillating motion of the sprayer boom (e.g., backward and forward, up and down, at angles, or the like) is monitored in a similar fashion and received by the target application controller 520 as corresponding compensation values to modify times of arrival (e.g., examples of compensation values). Additional examples of arrival times, compensation values for the same based on kinematic characteristics are discussed herein and shown in Figures 12 and 13.

As further shown in Figure 10, the compensation values, such as the halo profiles 1004, are optionally scaled (e.g., refined) as previously discussed herein. In the example shown in Figure 10, with monitoring of kinematic characteristics of the sprayer 10, sprayer boom 38, or the like included to determine one or more position or movement of the boom 38 and the associated nozzle assemblies 32 the compensation values are optionally smaller (in comparison to Figure 8) because of the higher resolution monitoring of the nozzle assembly 32 positions and the refinement of compensation values is at least partially attenuated (relative to Figure 8). The abatement of compensation values enhances the accuracy of targeted application to the targets T16-T18 relative to a configuration with the boom 38 presumed static as in Figure 8, and thereby decreases already targeted spraying to targeted spraying that uses less agricultural product.

In still other examples, the application system 500, such as the compensation value generator 510 interprets monitored behavior (e.g., kinematic characteristics) of one or both of the sprayer 10 or the sprayer booms 36, 38 (and the associated nozzle assemblies 32) to generate a model that outputs one or more values corresponding to estimated position, velocity, speed, or the like for one or more of the nozzle assemblies 32. The predicted sprayer boom behavior (e.g., from the model) permits the estimation of position, velocity, speed, or the like of the sprayer boom 38 and its associated nozzle assemblies 32 in a manner consistent with Figure 10. For instance, the estimated sprayer boom position, direction of movement, speed, or the like permits accurate position determination of the nozzle assemblies 32 and compensation values for the same that are compared (e.g., through position, times of arrival, or the like) with the forthcoming targets T16-T18. In this example, kinematics are monitored to generate the model for one or more of sprayer 10, sprayer boom 38, or nozzle assembly 32 movement, and the model is applied to predict sprayer boom behavior without having precise real time measurements of nozzle assembly positions.

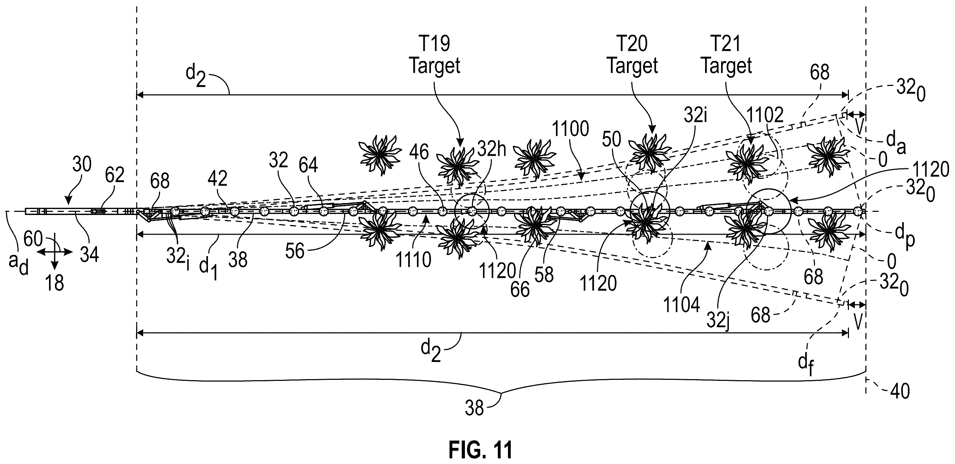

Figure 11 is another schematic view of the sprayer boom 38. In this example, movement of the sprayer boom 38 is determined based in part on a model of one or more of boom speed and direction (e.g., collectively velocity), and optionally other determined characteristics such as position, acceleration, pitch, yaw, roll, twist, curvature, or the like. For instance, the model is determined from previously monitored sprayer 10, boom 38, or both kinematic characteristics (with sensors 502, 504 in Figure 5), input characteristics (e.g., with the operator kinematic input 506), or the like. Optionally, the compensation value generator 510, such as one or more processors, generates the model for predicting movement of the sprayer boom 38, its associated nozzle assemblies 32, or both, for instance with an artificial intelligence or machine learning interface, algorithm, or the like. As previously discussed, the generation and application of the modeled behavior of the sprayer boom 38 in some examples decreases (including eliminates) monitoring of the sprayer boom 38 kinematic characteristics, for instance with sensors. Instead, the generated model permits rapid determination (including estimation) of one or more of boom locations, nozzle assembly locations, speeds, direction of movement, compensation values, or the like while decreasing processor load otherwise applied to processing images, sensor measurements or the like.

In an example, one or more of the sprayer boom 38 performance (e.g., kinematic characteristics) is monitored, the sprayer 10 performance (its kinematic characteristics) in monitored, or both are monitored over a specified period, such as 10 minutes, a portion of an agricultural operation in a field, an entire agricultural operation in the field, or the like. One or more of boom or sprayer kinematic sensors 502, 504 are employed to monitor performance. Optionally, the performance of one or more of the sprayer 10, sprayer boom 38, or the like is specified by the operator, for instance with the operator kinematic input 506 and based on experience and familiarity (e.g., with the sprayer 10 and sprayer boom 38, field, or the like). The monitored or input performance is assessed, for instance with the compensation value generation module 512 to model the performance of the sprayer boom 38. For example, an algorithm receives the kinematic characteristics and generates the model, a machine learning or AI interface generates the model from the kinematic characteristics, or the like. In another example, one or more models are stored with the application system, and a model having characteristics corresponding to the monitored or input performance is selected by application system 500 (including automatically selected) or manually selected by an operator.

Referring again to Figure 11 the sprayer boom 38 is illustrated in a number of modeled configurations indicative of sprayer boom position, direction of movement or the like. For instance, the modeled configurations are output configurations from an example model. The modeled configurations are output at a frequency, rate or the like (e.g., every 0.1 seconds, 0.5 seconds, 1 second, or the like) to determine one or more sprayer boom position, speed, nozzle assembly position, speed, or the like. Example first, second and third modeled deflected configurations 1100, 1102, 1104 are shown in Figure 11. The first modeled deflected configuration 1100 illustrates the sprayer boom 38 (dashed lines) in a forward deflected configuration and having a rearward direction of movement, for instance returning toward the initial (undeflected) configuration 1100 of the sprayer boom 38 shown in solid lines in Figure 11. The second modeled deflected configuration 1102 illustrates the sprayer boom 38 (dashed lines) in another forward deflected configuration while having a forward direction of movement, for instance moving toward the first modeled deflected configuration 1100 shown in Figure 11. The third modeled deflected configuration 1104 illustrates the sprayer boom 38 (dashed lines) in a rearward deflected configuration and having a forward direction of movement, for instance returning toward the initial (undeflected) configuration 1110 of the sprayer boom 38 shown in solid lines in Figure 11.

Optionally, the direction of movement for one or more of the modeled configurations is further clarified to include a determined speed (e.g., degrees per second, inches per second, with a positive or negative sign to indicate direction). In another example, the modeled configuration includes the determine speed without a determined position of the sprayer boom 38 or the associate nozzles 32. Instead, the determined sprayer boom 38 speed along with the sprayer 10 speed, nozzle assembly positions along the sprayer boom 38 (e.g., spacing), or the like is provided to the target application controller 5200 for determining the nozzle assembly location or time of arrival (including compensation values as discussed herein) relative to the targets, such as targets T19-T21.

The example configurations 1100, 1102, 1104 are illustrative examples of output from a model generated with the application system 500, for instance, from a stored catalog of models, AI or algorithm generated models, or the like. In one example, one more monitored kinematic characteristics, such as sprayer speed, acceleration or the like (e.g., translational, pitch, yaw, roll, or the like) is input to the model, and the modeled configuration is output (with 1100-1104 as examples) to permit the determination one or more of the position, speed, or the like of one or more of the sprayer boom 38 or nozzle assemblies 32. The target application controller 520 compares one or more of the output time of arrival, location of the nozzle assemblies (e.g., 32h, 32i, 32j), or the like with the targets T19-T21 and initiates spraying from the nozzle assemblies upon intersection between the nozzle assemblies 32h-j and the respective targets T19-T21. For example, intersections are determined in a similar manner to intersections in previous examples such as time of arrival, coexistence of locations, or the like.

Optionally, the model generated with the application system 500 also determines one or more compensation values for inclusion with determined nozzle assembly 32 locations. The compensation values, similar to the determined nozzle assembly locations, are output from the model or a related model for compensation values, and indexed to the respective nozzle assemblies 32. In a similar manner to previously described target and nozzle intersection mechanisms (e.g., see the target application controller 520) the compensation values generated with the model enhance the application of agricultural products by enhancing intersection between nozzle assemblies and targets whether with time based compensation, halo profiles, dimensional compensation values, or the like. Examples of halo profiles 1120, as one type of compensation value discussed herein, are shown in Figure 11 and indexed to the positions of the nozzle assemblies 32, such as 32h, 32i, 32j, in the initial configuration 1110 (solid lines) and the various modeled deflected configurations 1100, 1102, 1104 (dashed lines).

Figure 12 is a schematic view of an example of the sprayer 10 and the spray boom 36 that illustrates an example of determining nozzle assembly 32 and target T22 intersection based on time of arrival using compensation values based on kinematic characteristics of the sprayer boom 36 (and the associated nozzle assemblies 32). In a similar manner to other examples provided herein, the sprayer boom 36 is shown in an initial configuration 1200 (solid line) and respective forward and rearward deflected configurations 1202, 1204 (dashed lines). The sprayer boom 36, in this example, includes kinematic characteristics representative of swinging movement of the boom, alternatively referred to as boom sway. These kinematic characteristics are analyzed by the compensation value generator 510 (Figure 5) to generate compensation values, for instance 'a' and 'b' in Figure 12. As with other examples described herein, the compensation values are incorporated into intersection determination between the sprayer boom 36 and one or more aligned nozzle assemblies 32 conducted with the target application controller 520 (e.g., with time to target/compensated nozzle intersection).

Referring again to Figure 12 the sprayer 10 or the application system 500 includes one or more boom kinematic sensors 502, 1022; sprayer kinematic sensors 504, operator kinematic input 506; or the like. The sensors, inputs, or the like permit the monitoring or selection of one or more of sprayer 10, sprayer boom 36, or both kinematic characteristics. For instance, in Figure 12 the boom kinematic sensors 1022 included sensors distributed along the sprayer boom 36 that detect features in the surrounding terrain, such as crops, weeds, or the like and facilitate the determination of sprayer boom 36 kinematic characteristics. The boom kinematic sensors 1022 include, but are not limited to, radar, lidar, ultrasound, camera (still or video) sensors, or the like to monitor boom movement relative to features within the fields of view of the sensors. In another example, a boom kinematic sensor 502, shown in Figure 5, is directed along the sprayer boom 36 (38 in Figure 5) and monitors boom kinematic characteristics. In other examples, kinematic characteristics of the sprayer 10 are imputed to the sprayer boom 36, for instance through determination of sprayer boom kinematics from sprayer 10 movement and sprayer boom 36 properties (e.g., modulus of elasticity, modeled or empirical modulus or the like).

Analysis of the boom movement (also referred to as boom kinematic characteristics) is conducted with the compensation value generator 510, for instance the compensation value generation module 512. Refinements and assignments of the compensation values are optionally performed by the associated value refinement module 514 and value assignment module 516, see Figure 5. Referring again to Figure 12, in an example, the compensation values are determined in one example by measuring the deflection time between the forward and rearward deflections represented with the configurations 1202, 1204. For example, the deflection time (a) is 0.292 seconds. Accordingly, a deflection circuit (rearward 1204 to forward 1202 to rearward 124) is double (a) or (b) = 2(a), in this example 0.584 seconds. The compensation value generation module 512 inputs the (b) value to an algorithm, such as: $y 1 = x mod b$

Where x is the base time of arrival from the target, T22, to the sprayer boom 36 in the initial configuration 1200, 1.47 seconds in the present example with the sprayer 10 moving at 17 feed per second and with target, T22 25 feet from the boom 36. (b) is the 0.584 seconds value for a deflection circuit based on the monitored kinematic characteristics. The "mod" function returns the remainder for the division operation, x divided by b, or 0.51. In the example, y1 = 0.51 feet, and y1time (corresponding time to travel the y1 span) is $y 1 time = y 1 ∗ b$

For example, y1time is 0.297 seconds, the compensation value in this example. y1time is analyzed with one or more inequalities, in an example, to determine forward or backward movement of the sprayer boom 36 at intersection with the target T22 for modification of the base time (1.47 seconds). Example inequalities:
*if y*1*time* > 0.25 *AND y*1*time* < 0.75 → *at intersection* boom is in front of initial configuration.
*if y*1*time* < 0.25 *OR y*1*time* > 0.75
   → *at intersection boom is rearward of initial configuration*

In the present example because the compensation value, yltime, is 0.297 seconds it falls within the first inequality, and the intersection of the target T22 with the boom 36 (and its aligned nozzle assemblies 32) happens with the boom in a forward position. Accordingly, the base time of 1.47 seconds is modified by the compensation value by subtraction representing an earlier intersection because of the forward position. In other words, the base time of arrival, 1.47 seconds, is modified by the compensation value (y1time), 0.297 seconds, to 1.173 seconds. The target application controller 520, such as the target/compensated nozzle intersection module 522 thereby initiates spray at expiration of 1.173 seconds. Optionally, spraying is conducted for a specified period, such as a static time of 0.5 seconds, 1 second, or the like and the arrested. In another option spraying is conducted for a period of time based on the sprayer 10, sprayer boom 36 speeds or the like, with higher speeds having relatively shorter spray periods in comparison to lower speeds. Optionally, shorter spray periods are paired with increased sprayed flow rate of the agricultural product because of a decreased time for intersection (e.g., coincidence of the nozzle at the target) while relatively longer sprayer periods are paired with lesser sprayed flow rates of the agricultural product. In other examples, the compensation value, inequalities, or the like discussed herein are graduated based on the positions of aligned nozzle assemblies 32 (relative to the target, T22) along the sprayer boom 36. For instance, nozzles proximal to a boom distal end 603 (with the end 603 serving as the basis for the compensation value) will have a graduated lesser compensation value, such as 0.210 seconds, 0.153 seconds, potentially to 0.0 seconds relative to the example 0.297 second base compensation value for nozzle assemblies proximate to the boom proximal end 601.

The techniques shown and described in this document are performed in various examples using a portion or an entirety of an application system, such as the application system 500 shown in Figure 5; agricultural vehicles, such as the sprayer 10; implements, such as one or more sprayer booms 36, 38 and the associated nozzle assemblies 32; or the like as described herein or otherwise using a machine 1300 as discussed below in relation to Figure 13. Figure 13 illustrates a block diagram of an example comprising a machine 1300 upon which any one or more of the techniques (e.g., methodologies) discussed herein is performed. In various examples, the machine 1300 operates as a standalone device or is connected (e.g., networked) to other machines.

In a networked deployment, the machine 1300 operates in the capacity of a server machine, a client machine, or both in server-client network environments. In an example, the machine 1300 acts as a peer machine in peer-to-peer (P2P) (or other distributed) network environments. The machine 1300 is optionally a personal computer (PC), a tablet device, a set-top box (STB), a personal digital assistant (PDA), a mobile telephone, a web appliance, a network router, switch or bridge, field computer, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or a number of components, or mechanisms. Circuitry is a collection of circuits implemented in tangible entities that include hardware (e.g., simple circuits, gates, logic, etc.). Circuitry membership is flexible over time and underlying hardware variability. Circuitries include members that, alone or in combination, perform specified operations when operating. In an example, hardware of the circuitry is immutably designed to carry out a specific operation (e.g., hardwired). In another example, the hardware comprising the circuitry includes variably connected physical components (e.g., execution units, transistors, simple circuits, or the like) including a computer-readable medium physically modified (e.g., magnetically, electrically, such as via a change in physical state or transformation of another physical characteristic, or the like) to encode instructions of the specific operation. In connecting the physical components, the underlying electrical properties of a hardware constituent are changed, for example, from an insulating characteristic to a conductive characteristic or vice versa. The instructions enable embedded hardware (e.g., the execution units or a loading mechanism) to create members of the circuitry in hardware via the variable connections to carry out portions of the specific operation when in operation. Accordingly, the computer-readable medium is communicatively coupled to the other components of the circuitry when the device is operating. In an example, any of the physical components are used in more than one member of more than one circuitry. For example, under operation, execution units may be used in a first circuit of a first circuitry at one point in time and reused by a second circuit in the first circuitry, or by a third circuit in a second circuitry at a different time.

The machine 1300 (e.g., computer system) may include a hardware-based processor 1301 (e.g., a central processing unit (CPU), a graphics processing unit (GPU), a hardware processor core, or any combination or plurality thereof), a main memory 1303 and a static memory 1305, some or all of which may communicate with each other via an interlink 1330 (e.g., a bus, CAN bus or the like). The machine 1300 may further include one or more of a display device 1309, an input device 1311 (e.g., an alphanumeric keyboard), or a user interface (UI) navigation device 1313 (e.g., a mouse, track pad, track ball, stylus, or the like). In an example, the display device 1309, the input device 1311, and the UI navigation device 1313 comprise at least portions of a touch screen display. The machine 1300 may additionally include a mass storage device 1307 (e.g., a drive unit), a signal generation device 1317 (e.g., a speaker, light system, or the like), a network interface device 1350, and one or more sensors 1315, such as the sensors described herein for one or both of the sprayer 10, sprayer booms 38, or the various vehicle and implement examples and equivalents for the same. For instance, example sensors include, but are not limited to, sensors for monitoring one or more targets (e.g., weeds, crops, pests, or the like), sensors that monitor kinematic characteristics of one or more of the sprayer 10, sprayer booms 36, 38, component nozzle assemblies of the booms, or the like.

In another example, the machine 1300 includes one or more actuators 916, such as the actuators described herein for one or both of the sprayer 10, sprayer booms 36, 38 (articulation, boom height adjustment, or the like), nozzle assemblies (control valves, pulse width modulation valves, spray profile modulation features, or the like), or the like. The machine 1300 includes, in an example, an output controller 1319, such as a serial controller or interface (e.g., a universal serial bus (USB)), a parallel controller or interface, or other wired or wireless (e.g., infrared (IR) controllers or interfaces, near field communication (NFC), etc., coupled to communicate or control one or more peripheral devices (e.g., a printer, a card reader, etc.).

The storage devices 1303, 1305, 1307 include, but are not limited to, a machine readable medium on which is stored one or more sets of data structures or instructions 1324 (e.g., software or firmware) embodying or utilized by any one or more of the techniques or functions described herein including, but not limited to, the application system 500, compensation value generation (generator 510), target application (controller 520), or the like. The instructions 1324 may also reside, completely or at least partially, within a main memory 1303, within a static memory 1305, within a mass storage device 1307, or within the hardware-based processor 1301 (including processors) during execution thereof by the machine 1300. In an example, one or any combination of the hardware-based processor 1301, the main memory 1303, the static memory 1305, or the mass storage 1307 may constitute machine readable media. In another example, one or more of the memories 1303, 1305, 1307 retain the one or more algorithms, value look up tables, value databases, AI interface or algorithm, machine learning interface or algorithm, URLs, macros, or the like associated with the application system 500. In other examples, one or more of the memories 1303, 1305, 1307 retain a plurality of compensation values, algorithms for determining compensation values, models for determining compensation values, or the like.

While the machine readable medium is in one example considered as a single medium, the term "machine readable medium" may include a single medium or multiple media (e.g., a centralized or distributed database, and/or associated caches and servers) configured to store the one or more instructions 1324.

The term "machine readable medium" may include any medium that is capable of storing, encoding, or carrying instructions for execution by the machine 1300 and that cause the machine 1300 to perform any one or more of the techniques of the present disclosure, or that is capable of storing, encoding or carrying data structures used by or associated with such instructions. Non-limiting machine-readable medium examples may include solid-state memories, and optical and magnetic media. Accordingly, machine-readable media are not transitory propagating signals. Specific examples of massed machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic or other phase-change or state-change memory circuits; magnetic disks, such as internal hard disks and removable disks; magneto-optical disks; and CD-ROM and DVD-ROM disks.

The instructions 1324 may further be transmitted or received over a communications network 1321 using a transmission medium via the network interface device 1350 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., the Institute of Electrical and Electronics Engineers (IEEE) 802.22 family of standards known as Wi-Fi^{®}, the IEEE 802.26 family of standards known as WiMax^{®}), the IEEE 802.27.4 family of standards, peer-to-peer (P2P) networks, among others. In an example, the network interface device 1350 may include one or more physical jacks (e.g., Ethernet, coaxial, or phone jacks) or one or more antennas to connect to the communications network 1321. In an example, the network interface device 1350 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 1300, and includes digital or analog communications signals or other intangible medium to facilitate communication of such software.

### Various Notes and Aspects

Aspect 1 can include subject matter such as an agricultural product application system comprising: at least one sprayer boom extending from a boom proximal end to a boom distal end, the at least one sprayer boom configured for coupling with an agricultural sprayer proximate the proximal end, the at least one sprayer boom includes: a plurality of sprayer nozzles distributed along the at least one sprayer boom; and agricultural product plumbing interconnected with each of the sprayer nozzles of the plurality of sprayer nozzles; and one or more processors configured to: assign a compensation value to each of one or more sprayer nozzles of the plurality of sprayer nozzles, the compensation value based on one or more of boom kinematic characteristics of the at least one sprayer boom or the vehicle kinematic characteristics of the agricultural sprayer; monitor a target relative to at least one sprayer nozzle of the one or more sprayer nozzles and the assigned compensation value; and initiate spraying of an agricultural product from at least one sprayer nozzle of the plurality of sprayer nozzles while the target is coextensive with the at least one sprayer nozzle having the compensation value.

Aspect 2 can include, or can optionally be combined with the subject matter of Aspect 1, to optionally include wherein assigning the compensation value to each of the one or more sprayer nozzles includes assigning the compensation value to each sprayer nozzle of the plurality of sprayer nozzles.

Aspect 3 can include, or can optionally be combined with the subject matter of one or any combination of Aspects 1 or 2 to optionally include wherein a nozzle profile includes the sprayer nozzle and the assigned compensation value, and monitoring the target relative to the at least one sprayer nozzle of the one or more sprayer nozzle and the assigned compensation values includes monitoring the target relative to the nozzle profile.

Aspect 4 can include, or can optionally be combined with the subject matter of one or any combination of Aspects 1-3 to optionally include wherein assigning the compensation value to each of the one or more sprayer nozzles includes graduating the compensation value to each of the one or more sprayer nozzles based on nozzle locations of the one or more sprayer nozzles.

Aspect 5 can include, or can optionally be combined with the subject matter of one or any combination of Aspects 1-4 to optionally include wherein the one or more sprayer nozzles having assigned compensation values are static relative to the agricultural sprayer while the at least one sprayer boom and the plurality of sprayer nozzles are moving relative to the agricultural sprayer.

Aspect 6 can include, or can optionally be combined with the subject matter of Aspects 1-5 to optionally include wherein the compensation value includes a halo profile, and assigning the compensation value to each of the one or more sprayer nozzles includes indexing the halo profile to each of the one or more sprayer nozzles.

Aspect 7 can include, or can optionally be combined with the subject matter of Aspects 1-6 to optionally include wherein the halo profile includes a plurality of halo profiles and each of the halo profiles of the plurality of halo profiles are moving with the at least one sprayer boom and each of the one or more sprayer nozzles relative to the agricultural sprayer.

Aspect 8 can include, or can optionally be combined with the subject matter of Aspects 1-7 to optionally include one or more boom kinematic sensors configured to monitor one or more boom kinematic characteristics of the at least one sprayer boom, and the one or more boom kinematic sensors are in communication with the one or more processors.

Aspect 9 can include, or can optionally be combined with the subject matter of Aspects 1-8 to optionally include wherein the one or more boom kinematic sensors include one or more of camera, radar, or lidar sensors.

Aspect 10 can include, or can optionally be combined with the subject matter of Aspects 1-9 to optionally include wherein the one or more processors are configured to: generate the compensation value according to the one or more boom kinematic characteristics monitored with the one or more boom kinematic sensors; and refine the compensation value according to a nozzle position of each of the one or more sprayer nozzles.

Aspect 11 can include, or can optionally be combined with the subject matter of Aspects 1-10 to optionally include wherein refining the compensation value includes increasing a size of a halo profile between the boom proximal end and the boom distal end.

Aspect 12 can include, or can optionally be combined with the subject matter of Aspects 1-11 to optionally include wherein generating the compensation value according to the one or more boom kinematic characteristics includes generating the compensation value with artificial intelligence analysis of the one or more boom kinematic characteristics

Aspect 13 can include, or can optionally be combined with the subject matter of Aspects 1-12 to optionally include wherein monitoring the target relative to the at least one sprayer nozzle and the assigned compensation value includes determining a time of arrival for the at least one sprayer nozzle and the assigned compensation value relative to the target.

Aspect 14 can include, or can optionally be combined with the subject matter of Aspects 1-13 to optionally include the agricultural sprayer.

Aspect 15 can include, or can optionally be combined with the subject matter of Aspects 1-14 to optionally include a target identification sensor coupled with a sprayer chassis of the agricultural sprayer, wherein the target identification sensor is configured to identify and index one or more targets in a portion of a field aligned with the at least one sprayer boom.

Aspect 16 can include, or can optionally be combined with the subject matter of Aspects 1-15 to optionally include wherein the target identification sensor is in communication with the one or more processors, and the one or more processors are configured to assign a target compensation value to the one or more targets.

Aspect 17 can include, or can optionally be combined with the subject matter of Aspects 1-16 to optionally include an agricultural product application system comprising: at least one sprayer boom extending from a boom proximal end proximate to a sprayer chassis to a boom distal end, the at least one sprayer boom configured for coupling with the sprayer chassis of an agricultural sprayer, the at least one sprayer boom includes: a plurality of sprayer nozzles distributed along the at least one sprayer boom; and agricultural product plumbing interconnected with each of the sprayer nozzles of the plurality of sprayer nozzles; a target identification sensor configured for coupling with the sprayer chassis, wherein the target identification sensor is configured to identify and index one or more targets in a portion of a field aligned with the at least one sprayer boom; and one or more processors configured to: assign a halo profile to each of one or more sprayer nozzles of the plurality of sprayer nozzles, the halo profile based on one or more boom kinematic characteristics of the at least one sprayer boom; monitor the one or more targets relative to the respective halo profiles of each of the one or more sprayer nozzles; and initiate spraying of an agricultural product from at least one sprayer nozzle of the plurality of sprayer nozzles while the one or more targets are within the respective halo profile of the at least one sprayer nozzle.

Aspect 18 can include, or can optionally be combined with the subject matter of Aspects 1-17 to optionally include wherein assigning the halo profile to each of the one or more sprayer nozzles includes assigning the halo profile to each sprayer nozzle of the plurality of sprayer nozzles.

Aspect 19 can include, or can optionally be combined with the subject matter of Aspects 1-18 to optionally include wherein the respective halo profiles are static relative to the agricultural sprayer while the at least one sprayer boom and plurality of sprayer nozzles are moving relative to the agricultural sprayer.

Aspect 20 can include, or can optionally be combined with the subject matter of Aspects 1-19 to optionally include wherein the respective halo profiles are indexed respectively to each of the one or more sprayer nozzles, and the respective halo profiles are moving with the at least one sprayer boom and the plurality of sprayer nozzles relative to the agricultural sprayer.

Aspect 21 can include, or can optionally be combined with the subject matter of Aspects 1-20 to optionally include one or more boom kinematic sensors configured to monitor one or more boom kinematic characteristics of the at least one sprayer boom, and the one or more boom kinematic sensors are in communication with the one or more processors.

Aspect 22 can include, or can optionally be combined with the subject matter of Aspects 1-21 to optionally include wherein the one or more processors are configured to: generate the halo profile according to the one or more boom kinematic characteristics monitored with the one or more boom kinematic sensors; and refine at least one halo characteristic of the halo profile according to a nozzle position of each of the one or more sprayer nozzles.

Aspect 23 can include, or can optionally be combined with the subject matter of Aspects 1-22 to optionally include wherein monitoring the target relative to the respective halo profiles includes determining a time of arrival for the respective halo profile relative to the target.

Aspect 24 can include, or can optionally be combined with the subject matter of Aspects 1-23 to optionally include comprising the agricultural sprayer.

Aspect 25 can include, or can optionally be combined with the subject matter of Aspects 1-24 to optionally include a method for applying an agricultural product, the method comprising: selecting a compensation value for one or more of a sprayer nozzle of the sprayer boom or a target according to one or more of boom kinematic characteristics or target characteristics; assigning the compensation value to one or more of the sprayer nozzle or the target; and spraying an agricultural product from the sprayer nozzle, spraying the agricultural product includes: monitoring a target relative to the sprayer nozzle and the compensation value; and initiating spraying from the sprayer nozzle upon intersection between two or more of the sprayer nozzle, target, or compensation value.

Aspect 26 can include, or can optionally be combined with the subject matter of Aspects 1-25 to optionally include wherein, the one or more boom kinematic characteristics include one or more of boom position, boom velocity, boom acceleration, boom deflection, boom curvature, boom pitch, boom pitch rate, boom yaw, boom yaw rate, boom roll, or boom roll rate.

Aspect 27 can include, or can optionally be combined with the subject matter of Aspects 1-26 to optionally include wherein boom position includes one or more sprayer nozzle positions of the one or more sprayer nozzles; wherein boom velocity includes one or more sprayer nozzle velocities of the one or more sprayer nozzles; and wherein boom acceleration includes one or more sprayer nozzle accelerations of the one or more sprayer nozzles.

Aspect 28 can include, or can optionally be combined with the subject matter of Aspects 1-27 to optionally include wherein boom velocity includes boom velocity measured relative to a sprayer vehicle velocity or boom velocity measured relative to the sprayer vehicle velocity in combination with he sprayer vehicle velocity.

Aspect 29 can include, or can optionally be combined with the subject matter of Aspects 1-28 to optionally include wherein the one or more target characteristics include crop dimensions, weed dimensions, pest dimensions, canopy dimensions, or canopy profile.

Aspect 30 can include, or can optionally be combined with the subject matter of Aspects 1-29 to optionally include monitoring the one or more boom kinematic characteristics of the sprayer boom.

Aspect 31 can include, or can optionally be combined with the subject matter of Aspects 1-30 to optionally include wherein monitoring the one or more boom kinematic characteristics of the sprayer boom includes monitoring the one or more boom kinematic characteristic with a human operator.

Aspect 32 can include, or can optionally be combined with the subject matter of Aspects 1-31 to optionally include wherein selecting the halo profile for the one or more sprayer nozzles of the sprayer boom includes selecting the halo profile for the one or more sprayer nozzles with the human operator.

Aspect 33 can include, or can optionally be combined with the subject matter of Aspects 1-32 to optionally include wherein monitoring one or more boom kinematic characteristics of the sprayer boom includes monitoring the one or more boom kinematic characteristic with a boom kinematic sensor.

Aspect 34 can include, or can optionally be combined with the subject matter of Aspects 1-33 to optionally include wherein the boom kinematic sensor includes one or more of a camera coupled proximate to a sprayer vehicle, one or more radar sensors coupled along the sprayer boom.

Aspect 35 can include, or can optionally be combined with the subject matter of Aspects 1-34 to optionally include wherein selecting the compensation value for one or more of the sprayer nozzle or the target includes selecting the compensation value for one or more of the sprayer nozzle or the target with a compensation value generator.

Aspect 36 can include, or can optionally be combined with the subject matter of Aspects 1-35 to optionally include wherein assigning the compensation value to one or more of the sprayer nozzle or the target includes refining the compensation value the sprayer nozzle according to one or more of: a respective nozzle location of the at least one sprayer nozzle along the sprayer boom; or the one or more boom kinematic characteristics of the sprayer boom.

Aspect 37 can include, or can optionally be combined with the subject matter of Aspects 1-36 to optionally include wherein selecting the compensation value includes selecting one or more of a halo profile, profile radius, profile dimensions, profile shape, profile perimeter, profile boundary, or profile origin.

Aspect 38 can include, or can optionally be combined with the subject matter of Aspects 1-37 to optionally include wherein assigning the compensation value to one or more of the sprayer nozzle or the target includes one or more of: indexing the compensation value to multiple nozzle assemblies located along the sprayer boom; or indexing the compensation value to one or more targets.

Each of these non-limiting aspects can stand on its own, or can be combined in various permutations or combinations with one or more of the other aspects.

The above description includes references to the accompanying drawings, which form a part of the detailed description. The drawings show, by way of illustration, specific embodiments in which the invention can be practiced. These embodiments are also referred to herein as "aspects" or "examples." Such aspects or example can include elements in addition to those shown or described. However, the present inventors also contemplate aspects or examples in which only those elements shown or described are provided. Moreover, the present inventors also contemplate aspects or examples using any combination or permutation of those elements shown or described (or one or more features thereof), either with respect to a particular aspects or examples (or one or more features thereof), or with respect to other Aspects (or one or more features thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Geometric terms, such as "parallel", "perpendicular", "round", or "square", are not intended to require absolute mathematical precision, unless the context indicates otherwise. Instead, such geometric terms allow for variations due to manufacturing or equivalent functions. For example, if an element is described as "round" or "generally round," a component that is not precisely circular (e.g., one that is slightly oblong or is a many-sided polygon) is still encompassed by this description.

Method aspects or examples described herein can be machine or computer-implemented at least in part, for instance with one or more processors, associated memory, input and output devices. Some aspects or examples can include a computer-readable medium or machine-readable medium encoded with instructions operable to configure an electronic device to perform methods as described in the above aspects or examples. An implementation of such methods can include code, circuits, code modules, software modules, hardware modules or the like, such as or having microcode, assembly language code, a higher-level language code, hardwiring or the like. Such code can include computer readable instructions for performing various methods. The code may form portions of computer program products or is included in controllers, programmable logic controllers or the like having modules (e.g., circuits, software, subunits or the like) configured to implement the code and perform the various methods. Further, in an aspect or example, the code can be tangibly stored on one or more volatile, non-transitory, or non-volatile tangible computer-readable media, such as during execution or at other times. Aspects or examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), circuits and the like.

The above description is intended to be illustrative, and not restrictive. For example, the above-described aspects or examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as aspects, examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. An agricultural product application system comprising:
at least one sprayer boom extending from a boom proximal end to a boom distal end, the at least one sprayer boom configured for coupling with an agricultural sprayer proximate the proximal end, the at least one sprayer boom includes:
a plurality of sprayer nozzles distributed along the at least one sprayer boom; and
agricultural product plumbing interconnected with each of the sprayer nozzles of the plurality of sprayer nozzles; and
one or more processors configured to:
assign a compensation value to each of one or more sprayer nozzles of the plurality of sprayer nozzles, the compensation value based on one or more of boom kinematic characteristics of the at least one sprayer boom or the vehicle kinematic characteristics of the agricultural sprayer;
monitor a target relative to at least one sprayer nozzle of the one or more sprayer nozzles and the assigned compensation value; and
initiate spraying of an agricultural product from at least one sprayer nozzle of the plurality of sprayer nozzles while the target is coextensive with the at least one sprayer nozzle having the compensation value.

2. The agricultural product application system of claim 1, wherein a nozzle profile includes the sprayer nozzle and the assigned compensation value, and monitoring the target relative to the at least one sprayer nozzle of the one or more sprayer nozzle and the assigned compensation values includes monitoring the target relative to the nozzle profile.

3. The agricultural product application system of claim 1 or 2, wherein assigning the compensation value to each of the one or more sprayer nozzles includes graduating the compensation value to each of the one or more sprayer nozzles based on nozzle locations of the one or more sprayer nozzles.

4. The agricultural product application system of any of the preceding claims, wherein the one or more sprayer nozzles having assigned compensation values are static relative to the agricultural sprayer while the at least one sprayer boom and the plurality of sprayer nozzles are moving relative to the agricultural sprayer.

5. The agricultural product application system of any of the preceding claims, wherein the compensation value includes a halo profile, and assigning the compensation value to each of the one or more sprayer nozzles includes indexing the halo profile to each of the one or more sprayer nozzles; and
wherein, preferably, the halo profile includes a plurality of halo profiles and each of the halo profiles of the plurality of halo profiles are moving with the at least one sprayer boom and each of the one or more sprayer nozzles relative to the agricultural sprayer.

6. The agricultural product application system of any of the preceding claims, comprising one or more boom kinematic sensors configured to monitor one or more boom kinematic characteristics of the at least one sprayer boom, and the one or more boom kinematic sensors are in communication with the one or more processors; and
wherein, preferably, the one or more boom kinematic sensors include one or more of camera, radar, or lidar sensors.

7. The agricultural product application system of claim 6, wherein the one or more processors are configured to:
generate the compensation value according to the one or more boom kinematic characteristics monitored with the one or more boom kinematic sensors; and
refine the compensation value according to a nozzle position of each of the one or more sprayer nozzles, and
wherein, preferably, refining the compensation value includes increasing a size of a halo profile between the boom proximal end and the boom distal end and/or generating the compensation value according to the one or more boom kinematic characteristics includes generating the compensation value with artificial intelligence analysis of the one or more boom kinematic characteristics.

8. The agricultural product application system of any of the preceding claims, wherein monitoring the target relative to the at least one sprayer nozzle and the assigned compensation value includes determining a time of arrival for the at least one sprayer nozzle and the assigned compensation value relative to the target.

9. The agricultural product application system of any of the preceding claims, comprising the agricultural sprayer.

10. The agricultural product application system of claim 9, comprising a target identification sensor coupled with a sprayer chassis of the agricultural sprayer, wherein the target identification sensor is configured to identify and index one or more targets in a portion of a field aligned with the at least one sprayer boom; and
wherein, preferably, the target identification sensor is in communication with the one or more processors, and the one or more processors are configured to assign a target compensation value to the one or more targets.

11. A method for applying an agricultural product, the method comprising:
selecting a compensation value for one or more of a sprayer nozzle of the sprayer boom or a target according to one or more of boom kinematic characteristics or target characteristics;
assigning the compensation value to one or more of the sprayer nozzle or the target; and
spraying an agricultural product from the sprayer nozzle, spraying the agricultural product includes:
monitoring a target relative to the sprayer nozzle and the compensation value; and
initiating spraying from the sprayer nozzle upon intersection between two or more of the sprayer nozzle, target, or compensation value.

12. The method of claim 11, wherein, the one or more boom kinematic characteristics include one or more of boom position, boom velocity, boom acceleration, boom deflection, boom curvature, boom pitch, boom pitch rate, boom yaw, boom yaw rate, boom roll, or boom roll rate; and/or
wherein the one or more target characteristics include crop dimensions, weed dimensions, pest dimensions, canopy dimensions, or canopy profile.

13. The method of claim 11 or 12, comprising monitoring the one or more boom kinematic characteristics of the sprayer boom.

14. The method of claim 13, wherein monitoring the one or more boom kinematic characteristics of the sprayer boom includes monitoring the one or more boom kinematic characteristic with a human operator; and/or
wherein monitoring one or more boom kinematic characteristics of the sprayer boom includes monitoring the one or more boom kinematic characteristic with a boom kinematic sensor.

15. The method of any of the preceding claims 11 to 14, wherein selecting the compensation value for one or more of the sprayer nozzle or the target includes selecting the compensation value for one or more of the sprayer nozzle or the target with a compensation value generator; and/or
wherein assigning the compensation value to one or more of the sprayer nozzle or the target includes refining the compensation value the sprayer nozzle according to one or more of:
a respective nozzle location of the at least one sprayer nozzle along the sprayer boom; or
the one or more boom kinematic characteristics of the sprayer boom; and/or
wherein selecting the compensation value includes selecting one or more of a halo profile, profile radius, profile dimensions, profile shape, profile perimeter, profile boundary, or profile origin; and/or
wherein assigning the compensation value to one or more of the sprayer nozzle or the target includes one or more of:
indexing the compensation value to multiple nozzle assemblies located along the sprayer boom; or
indexing the compensation value to one or more targets.
